(19) Europäisches Patentamt
European Patent Office
Office européen des brevets

(11) **EP 1 660 269 B1**

(12) **EUROPÄISCHE PATENTSCHRIFT**

(45) Veröffentlichungstag und Bekanntmachung des Hinweises auf die Patenterteilung:
**25.03.2009 Patentblatt 2009/13**

(21) Anmeldenummer: **04764735.9**

(22) Anmeldetag: **02.09.2004**

(51) Int Cl.:
***B23K 26/38*** *(2006.01)*    ***H01S 3/10*** *(2006.01)*
***B23K 26/14*** *(2006.01)*    ***B23K 26/06*** *(2006.01)*

(86) Internationale Anmeldenummer:
**PCT/EP2004/009776**

(87) Internationale Veröffentlichungsnummer:
**WO 2005/023480 (17.03.2005 Gazette 2005/11)**

(54) **VERFAHREN UND VORRICHTUNG ZUM BOHREN VON LÖCHERN MIT CO2-LASERIMPULSEN**

METHOD AND DEVICE FOR DRILLING HOLES USING CO2 LASER PULSES

PROCEDE ET DISPOSITIF POUR PERCER DES TROUS PAR IMPULSIONS LASER CO2

(84) Benannte Vertragsstaaten:
**AT BE BG CH CY CZ DE DK EE ES FI FR GB GR HU IE IT LI LU MC NL PL PT RO SE SI SK TR**

(30) Priorität: **05.09.2003 DE 10340931**

(43) Veröffentlichungstag der Anmeldung:
**31.05.2006 Patentblatt 2006/22**

(73) Patentinhaber: **PRELATEC GmbH**
**70563 Stuttgart (DE)**

(72) Erfinder:
• **WALTER, Herbert**
**78737 Fluorn-Winzeln (DE)**
• **STAUPENDAHL, Gisbert**
**07743 Jena (DE)**

(74) Vertreter: **Neunert, Peter Andreas**
**Patentanwälte**
**Westphal, Mussgnug & Partner**
**Am Riettor 5**
**78048 Villingen-Schwenningen (DE)**

(56) Entgegenhaltungen:
WO-A-89/03274      DE-A- 19 745 280
DE-C- 19 905 571      FR-A- 2 269 221
US-B1- 6 292 505

EP 1 660 269 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren und eine Vorrichtung zum Bohren von Löchern mit $CO_2$-Laserimpulsen unter Verwendung eines $CO_2$-Lasers. Insbesondere betrifft die Erfindung ein Verfahren und eine Vorrichtung zum Bohren feinster Löcher, d. h. Löcher mit einem Durchmesser von weniger als 100 μm, hoher Qualität und Variabilität der Bohrlochparameter, insbesondere der Lochgeometrie, mit $CO_2$-Laserimpulsen unter Verwendung eines $CO_2$-Lasers höchster Strahlqualität, d. h. mit einer Strahlqualitätskennzahl größer als 0,8, bei gleichzeitigem Schutz konstruktiver Elemente, wie z.B. Flächen, die dem Bohrloch in geringem Abstand (mm-Bereich) gegenüberliegen, vor schädlicher Beeinflussung, wie Aufheizen, Anschmelzen oder gar Abdampfen infolge durch das Bohrloch hindurchtretender Strahlung.

Das Bohren von Löchern als eine außerordentlich breit eingesetzte Basistechnologie hat durch den Einsatz der Lasertechnik in den letzten Jahrzehnten einen Innovationsschub bekommen, der alle relevanten Parameter betrifft. An erster Stelle ist dabei die hohe Präzision der Bearbeitung zu nennen, die bis zu Feinstbohrungen im μm-Bereich reicht, aber auch die neuen Möglichkeiten der Bearbeitung von besonders schwierigen Werkstoffen, die z.B. durch hohe Schmelz- und Verdampfungstemperaturen, große Härte oder hohe Sprödigkeit charakterisiert sind. Die erreichten kurzen Bearbeitungszeiten oder die Flexibilität im Hinblick auf die Bohrlochgeometrie eröffnen dem Laserstrahlbohren immer wieder neue Einsatzfelder und rücken ständig neue Herausforderungen in den Blickpunkt von Wissenschaft und Technik. Mit der Verfeinerung der zur Verfügung stehenden Technologien wächst gleichermaßen auch die Wunschliste der Industrie nach Parametern bei der Lochfertigung, die immer wieder an die Grenzen des jeweiligen Standes der Technik führen. Zur Lösung dieser Aufgaben gibt es neben der Palette der etablierten Bearbeitungslaser und dem kontinuierlichen Fortschritt der Lasertechnik allgemein, z.B. auf dem Gebiet der Kurzpulstechnik, im Wesentlichen vier Verfahrensvarianten zum Bohren mit Laserstrahlung, die sich hinsichtlich der Pulszahl und der raum- bzw. zeitaufgelösten Pulsfolge unterscheiden lassen. Diese Verfahren sind das Einzelpulsbohren, das Perkussionsbohren, das Trepanierbohren und das Wendelbohren (F. Dausinger, T. Abeln, D. Breitling, J. Radtke: Bohren keramischer Werkstoffe mit Kurzpuls-Festkörperlaser. LaserOpto 31 (3), 78(1999)). Die Wahl des Verfahrens richtet sich nach den applikationsspezifischen Qualitätsansprüchen. Während das Einzelpulsbohren als einfachste Version im Bereich der Hochgeschwindigkeitsbearbeitung mit relativ geringen qualitativen Ansprüchen anzusiedeln ist, nimmt die Qualität mit zunehmendem Verfahrensaufwand in der Regel um den Preis einer Prozessverlangsamung zu.

Beim Einzelpulsbohren wird die gesamte Energie zur Herstellung der gewünschten Bohrung mit einem einzigen Strahlungsimpuls eingebracht. Typische Bohrungsdurchmesser liegen zwischen 20 μm und 250 μm, typische Bohrtiefen bei wenigen mm. Da hier die Durchmessertoleranzen und Rauhigkeitskennwerte in der Größenordnung von ± 10 μm liegen, ist das Einzelpulsbohren für die Herstellung von Präzisionsbohrungen nicht geeignet (VDI: Abtragen, Bohren und Trennen mit Festkörperlasern. Laser in der Materialbearbeitung Band 7, VDI-Verlag, Düsseldorf (1998)).

Zur Steigerung der Qualität ist es vielmehr vorteilhaft, das Bohrungsvolumen in vielen Einzelschritten abzutragen, da durch die reduzierte Abtragsmenge je Puls instabile Prozessabläufe minimiert werden können. Dies wird z.B. beim Perkussionsbohren realisiert, bei dem eine Serie von Pulsen auf die gleiche Stelle des Werkstückes abgegeben wird. Auf diese Weise lassen sich schlanke Bohrungen (Aspektverhältnisse deutlich über 10 sind möglich) mit Durchmessern zwischen einigen 10 μm und 500 μm über mehrere mm Tiefe erzeugen (H. Hügel: Strahlwerkzeug Laser. Teubner Studienbücher, Stuttgart (1992)). Nachteilig gegenüber dem Einzelpulsbohren ist beim Perkussionsbohren die niedrigere Prozessgeschwindigkeit.

Werden Bohrungsdurchmesser gewünscht, die die Größe des Fokus übersteigen, kommen zu ihrer Herstellung die Bearbeitungsverfahren Trepanierbohren und Wendelbohren in Frage. Beim Trepanieren werden die Bohrungen durch einen gepulsten Laserstrahl quasi ausgeschnitten mit dem Vorzug, dass sich Bohrungen mit hoher Parallelität der Bohrlochwände, glatten Flanken sowie scharfen Ein- und Austrittskanten über einen einige mm großen Durchmesser- und Tiefenbereich herstellen lassen. Hier ist der Bohrungsdurchmesser vom Strahlquerschnitt weitgehend unabhängig, was beim Einsatz von Kurzpulslasern die Reduzierung des auftretenden Schmelzfilms ermöglicht. Dies wird sofort klar, wenn man den von der Fokussierung abhängigen Intensitätsgradienten eines Gaußstrahls betrachtet. Während sich bei Abstimmung des Fokusdurchmessers beim einfachen Einzelpuls- oder Perkussionsbohren auf die gewünschte Bohrungsgröße eine Gaußverteilung mit flachem Gradienten ergibt, lässt das Trepanier- und Wendelbohren einen Strahl mit sehr steilen Flanken zu. Dadurch wird die Abtragsschwelle des jeweiligen Materials innerhalb engerer Grenzen erreicht, wodurch die Präzision zunimmt.

Die notwendige Relativbewegung zwischen Strahl und Werkstück kann auf unterschiedlichste Weise realisiert werden, z.B. durch die Führung des Strahls mittels einer auf rotierenden Teilplatten basierenden Optik oder durch die Bewegung des Werkstückes selbst. Moderne Trepanieroptiken sind in der Lage, den Strahl gegenüber seiner ursprünglichen Strahlachse zu kippen und zu versetzen, damit über die anschließende Fokussierung ein Versatz (Radius der Bohrung) und ein Hinterschnitt (Konus der Bohrung) entsteht (K. Jasper: Neue Konzepte der Laserstrahlformung und -führung für die Mikrotechnik. Utz Verlag München, zur Veröffentlichung vorgesehen (2003)).

Das Wendelbohren unterscheidet sich vom Trepanieren, das den Schneidverfahren zugeordnet werden kann, dadurch, dass die Bohrung erst nach mehreren Überfahrten fertiggestellt ist. Die damit verbundene Reduzierung des Abtragvolumens pro Strahlungsimpuls wirkt sich ebenfalls positiv auf die Präzision der Bohrung aus.

Die zum Bohren einsetzbare Palette von Lasern ist außerordentlich vielgestaltig (G. Herziger, P. Loosen: Werkstoffbearbeitung mit Laserstrahlung. München, Wien: Carl Hanser Verlag, 1993). Sie reicht vom Rubinlaser als dem "Pionier" des Laserstrahlbohrens, mit dem bereits vor 40 Jahren industriell Uhrensteine gebohrt wurden, über die am breitesten eingesetzten Nd:YAG- und $CO_2$-Laser bis hin zu Excimerlasern für Feinstbohrungen und in jüngster Zeit die Ultrakurzpulslaser (ps- und fs-Bereich), insbesondere Titan-Saphir- und Faserlaser.

Aus prinzipiellen physikalischen Gründen sind Laserstrahlen um so besser fokussierbar (und damit um so kleinere Lochdurchmesser möglich), je kürzer ihre Wellenlänge ist. Hier liegt der Hauptvorzug der Excimerlaser mit Wellenlängen im UV-Bereich und der Hauptnachteil der $CO_2$-Laser mit ihrer relativ großen Wellenlänge um etwa 10 $\mu$m. Zahlreiche andere Aspekte relativieren jedoch die Verhältnisse drastisch. So kann die optimale Fokussierung nur bei guter Strahlqualität (möglichst $TEM_{00}$-Mode, also gaußförmiges Intensitätsprofil) realisiert werden. Hier liegt nun wieder ein großer Vorzug des $CO_2$-Lasers, der in zahlreichen kommerziellen Versionen verfügbar ist, die bei hohen Ausgangsleistungen im kW-Bereich Strahlqualitätskennzahlen K nahe 1 (typisch für $CO_2$-Laser guter bis sehr guter Strahlqualität sind K-Werte zwischen 0,7 und 0,9) erreichen. Hinzu kommen Aspekte wie die gute Pulsbarkeit mit möglichst großer Variationsbreite der Pulsparameter zur optimalen Anpassung an den Wechselwirkungsprozess Laserstrahlung-Werkstoff, ausreichend hohe Leistungen (sowohl mittlere als auch Pulsspitzenleistungen), die Langzeitstabilität aller Laserparameter (3-Schichtbetrieb!) und schließlich die Investitions- und Betriebskosten. Da der $CO_2$-Laser als der auch heute noch am breitesten eingesetzte Materialbearbeitungslaser speziell unter den zuletzt genannten Gesichtspunkten relevante Vorteile gegenüber etablierten Lasern wie Nd:YAG- und Excimerlasern, erst recht aber gegenüber den noch in der Entwicklung befindlichen Verfahren, z.B. dem Bohren mit ultrakurzen Impulsen, besitzt, ist es aus Sicht des industriellen Einsatzes sinnvoll, alle Möglichkeiten dieses Lasertyps maximal auszureizen und so die höchste Effizienz bei der Lösung solcher Aufgaben zu sichern, die zunächst bei der Betrachtung des Standes des Technik außerhalb der Möglichkeiten der $CO_2$-Lasertechnik zu liegen scheinen.

Als eine solche Aufgabe höchster Aktualität soll exemplarisch das Bohren von Einspritzdüsen in der Kfz-Technik genannt und nachfolgend näher diskutiert werden (die Palette anspruchsvoller high-tech-Bohrungen lässt sich selbstverständlich beliebig erweitern; es sei nur auf das Laserstrahlbohren von chirurgischen Kanülen, Turbinenschaufeln, Luftleitblechen, Filtereinheiten, Drosseln etc. hingewiesen). Zur Verwirklichung von Kraftstoffeinsparungen bei gleichzeitiger Leistungssteigerung der Motoren tragen neben dem Einspritzdruck auch Form, Anzahl und Größe der Kraftstoffeinspritzöffnungen maßgeblich bei, da sie die Charakteristik des sich ausbildenden Kraftstoffsprays und dadurch den Verbrennungsablauf im Motor festlegen. Um zukünftige Abgasnormen zu erfüllen, gehen die Entwicklungen in der Einspritztechnik hin zu immer höheren Drücken bei gleichzeitig unter 100 $\mu$m sinkenden Öffnungsdurchmessern der Düse. Außerdem steigen die Anforderungen an die Präzision der Bohrungen sprunghaft an, um die strömungstechnischen Vorgaben einhalten zu können. Damit sind also spraybildende Düsenöffnungen im Visier, die ca. 70 $\mu$m Durchmesser bei einer Tiefe von 1 mm aufweisen, scharfkantige Ein- und Austrittsränder sowie glatte Lochflanken besitzen und von einfach konischer Gestalt sind. Schmelzrückstände und thermisch bedingte Gefügeveränderungen im angrenzenden Material sind nicht zugelassen, eventuell sind der Lochfertigung aufwendige Prozesse nachgeschaltet, um Restmängel zu beseitigen. Die geometrischen Toleranzen der Bohrungen liegen bei wenigen Prozent.

Zur Zeit am besten werden die gestellten Anforderungen durch funkenerosive Verfahren (M. Feurer: Elektroerosive Metallbearbeitung. Vogel-Buchverlag, Würzburg (1983)) (B. Schumacher, D. Weckerle: Funkenerosion - Richtig verstehen und anwenden. Technischer Fachverlag Dipl.-Ing. K.H. Möller, Velbert (1988)) erfüllt, allerdings mit dem Nachteil sehr langer Bearbeitungszeiten pro Loch und objektiven Grenzen bezüglich des Durchmessers (ca. 100 $\mu$m) und vor allem der Form (Konizität) der Bohrung.

Seit einer Reihe von Jahren versucht man intensiv, relevante Fortschritte durch den Einsatz der Lasertechnik zu erreichen, bisher jedoch mit begrenztem Erfolg. Ursachen dafür sind neben den extrem hohen Forderungen an die Präzision und Zuverlässigkeit (Reproduzierbarkeit aller Parameter) der Bearbeitung vor allem auch technische Details, die eine industrielle Nutzung verhindern, selbst wenn das Bohren eines einzelnen Loches mit den gewünschten Parametern gelungen ist. An dieser Stelle seien zwei Beispiele genannt, die an die geometrischen Randbedingungen bei der Bearbeitung von Einspritzdüsen verknüpft sind.

Ein Hauptproblem ist z. B. die Vernichtung der Reststrahlung, die durch das Bohrloch zum Ende des Bohrprozesses hindurchtritt und die relativ nahe (ca. 1 mm) gegenüberliegende Wand beschädigt, wenn keine besonderen Vorkehrungen getroffen werden. Die bisher genutzten Methoden, z. B. Einführung eines Opferkegels in den Raum zwischen den beiden Wänden, sind zeit- und kostenaufwendig und können die Bohrqualität an der Strahlaustrittsseite verschlechtern. Der Einsatz billiger absorbierender Flüssigkeiten, z.B. Wasser, scheitert bei den üblichen eingesetzten Lasern (Nd:YAG-Laser, in jüngster Zeit auch Titan-Saphir- oder Faserlaser) an der Wellenlänge um 1 $\mu$m, für die Wasser praktisch transparent ist.

Ein zweites Problem ergibt sich, wenn mittels Trepaniertechnik bei sehr feiner Fokussierung (z.B. bei ca. 20 $\mu$m Schnittfugenbreite) ein kegelförmiger Bohrkern entsteht. Dessen prozessgerechte Entfernung ist schwierig, speziell z. B. bei der Nutzung des vorstehend beschriebenen Opferkegels.

Letztlich ist es so, dass bei allen bisher genutzten Verfahren gravierende Probleme im Hinblick auf die komplexe Erfüllung der o. g. Forderungen z. B. beim Bohren von Kraftstoffeinspritzdüsen noch ungelöst sind bzw. nur mit sehr hohem Aufwand gelöst werden können. Das betrifft die immer größer werdenden Bohrungszeiten, wenn es auf die "magische" 100 $\mu$m-Marke für den Bohrlochdurchmesser zugeht, ebenso, wie die Probleme mit der konischen Form der Bohrlöcher, die geometrischen Genauigkeitsforderungen allgemein, das Problem der Randschichten oder das Problem der Vernichtung der Reststrahlung. Die existierenden Lösungsvorschläge befinden sich häufig noch im Stadium der Grundlagenforschung oder erfordern hohen Kostenaufwand.

Ein Verfahren zur Erzeugung definiert konischer Löcher mittels eines Laserstrahls wird in der DE 199 05 571 C1 beschrieben, welches zirkular polarisiertes Laserlicht verwendet, um nach Anpassung des Durchmessers und der Divergenz des Laserstrahls durch Kombination einer Taumelbewegung des Laserstrahls und gleichzeitiger synchroner Drehung des Laserstrahls um seine eigene Achse Bohrlöcher mit definierter Lochgeometrie, insbesondere konische Bohrlöcher, herzustellen.

Der US 6 292 505 B1 ist ein Laser zu entnehmen, welcher sowohl einen Laserstrahl mit hoher Spitzenintensität und kleiner Pulsbreite als auch einen Laserstrahl mit geringer Spitzenintensität und großer Pulsbreite oder einen kontinuierlichen Laserstrahl emittieren kann.

In der DE 197 45 380 A1 wird ein Verfahren zur Bearbeitung von Werkstücken mittels Laserstrahlen offenbart, bei welchem der Laserstrahl vor dem Auftreffen auf das Werkstück durch drei Module geführt wird, wobei in dem ersten Modul der Laserstrahl um seine Strahlachse gedreht wird, mittels des zweiten Moduls der Auftreffpunkt des Laserstrahls auf dem Werkstück variiert wird und mittels des dritten Moduls die Auftreffneigung des Laserstrahls relativ zur Oberfläche des Werkstücks variiert wird.

Die FR 2 269 221 A beschreibt einen gepulsten Hochleistungslaser mit einem System zur Vermeidung von Strahlungsrückkopplung.

Ein Verfahren zum Bohren von feinen Löchern, bei welchem die Rückseite des zu bearbeitenden Werkstücks während des Bohrprozesses mit einer Flüssigkeit oder einem Gas bespült wird, wird in der WO 89/03274 A offenbart.

Der Erfindung liegt nun die Aufgabe zu Grunde, ein Verfahren und eine Vorrichtung zu schaffen, die einerseits eine Technologie zum Bohren feinster Löcher hoher Qualität und Variabilität der Bearbeitungsparameter bei hoher Effizienz, also kurzen Bearbeitungszeiten, bereitstellen, andererseits die kostengünstige, technisch ausgereifte und zuverlässige $CO_2$-Lasertechnik nutzen.

Die Aufgabe wird durch ein Verfahren zum Bohren von Löchern mit $CO_2$-Laserimpulsen unter Verwendung eines $CO_2$-Lasers gemäß Patentanspruch 1 und durch eine Vorrichtung zum Bohren von Löchern mit $CO_2$-Laserimpulsen unter Verwendung eines $CO_2$-Lasers gemäß Patentanspruch 19 gelöst.

Weitere Merkmale des erfindungsgemäßen Verfahrens bzw. der erfindungsgemäßen Vorrichtung zur Durchführung des Verfahrens sind Gegenstand der Unteransprüche.

Zusätzlich zu den bereits bekannten Schritten der Umformung der linear polarisierten Strahlung des $CO_2$-Lasers in zirkular polarisierte Strahlung, des Einsatzes optischer Elemente zur Anpassung von Durchmesser und Divergenz des Strahlenbündels sowie Rotation des Intensitätsprofils des Strahlenbündels um seine Strahlachse und Rotation des gesamten Strahlenbündels um die Systemachse mit definiertem, aber frei einstellbarem Abstand sowie Winkel zwischen der Achse des Strahlenbündels und der Systemachse dergestalt, dass bei der anschließenden Fokussierung des so geformten Strahlenbündels mittels der Fokussieroptik auf die gewünschte Bearbeitungsstelle gewährleistet ist, dass einerseits alle Strahlanteile in diesem Fokusspot vereinigt werden und andererseits die Divergenz der Strahlung nach Passieren des Fokusspots so angepasst ist, dass die gewünschte Lochform entsteht, umfasst das erfindungsgemäße Verfahren gemäß Patentanspruch 1 folgende Schritte:

- Die Strahlungsimpulse bzw. Strahlungsimpulsfolgen aus der Strahlung des $CO_2$-Lasers werden extern, also außerhalb des Laserresonators geformt, wodurch deren zeitlicher Leistungsverlauf, also Spitzenleistung, Dauer und Form der Impulse, sowie deren Strahlqualität derart beeinflusst werden können, dass ein optimaler Bohrprozess gewährleistet wird.

- Die Umgebung des Fokusspots wird mit einem Arbeits- und Schutzgas beblasen. Dies dient zur Optimierung der Wechselwirkung Laserstrahl-Werkstoff, insbesondere zur Reduzierung der verfahrensschädigenden Anteile geschmolzenen Werkstoffes. Dieser Schritt wird vorzugsweise dadurch verbessert, dass ein Gemisch aus Sauerstoff und einem Inertgas, vorzugsweise Argon, zum Beblasen verwendet wird.

- Ein weiterer erfindungsgemäßer Schritt besteht in der Unterdrückung der Strahlungsrückkopplung zwi-

schen Werkstück und $CO_2$ -Laser durch eine wellenlängenselektive Entkopplungseinheit.

- Schließlich werden eventuell dem Bohrloch in geringem Abstand (mm-Bereich) gegenüberliegende konstruktive Elemente des Bauteils vor unerwünschten Wirkungen der durch das Bohrloch hindurchtretenden Reststrahlung durch ein an der Unterseite des bearbeiteten Werkstücks strömendes Fluid, vorzugsweise eine die Laserstrahlung ausreichend stark absorbierende Flüssigkeit, geschützt.

Durch diesen umfangreichen Komplex von Verfahrensschritten wird sicher gestellt, dass das gesamte der $CO_2$ -Lasertechnik innewohnende Potential für das Bohren feinster Löcher, insbesondere Löcher mit einem Durchmesser von weniger als 100 $\mu$m, abgerufen und im Hinblick auf die Ziele der Erfindung, insbesondere höchste Qualität und Variabilität der Bohrlochparameter bei hoher Effizienz, also hoher Bearbeitungsgeschwindigkeit und minimalen Kosten, umgesetzt werden kann. Voraussetzung dafür ist die Nutzung eines $CO_2$ -Lasers höchster Strahlqualität, dessen Ausgangsleistung - gepulst oder kontinuierlich - ausreichend groß für die jeweilige Bearbeitungsaufgabe ist. Damit ein CO2-Laser höchste Strahlqualität aufweist, sollte die Strahlqualitätskennzahl K möglichst > 0,8 sein. Weiterhin muss die Leistung für typische Bearbeitungsaufgaben, z. B. Bohren von 1 mm dickem CrNi-Stahl, in der Größenordnung 1 kW liegen.

Das externe Formen der Strahlungsimpulse bzw. der Strahlungsimpulsfolgen dient im Wesentlichen zwei Zielen:

- Formung von Impulsen, die optimal für den Bohrprozess geeignet sind, bei
- Erhaltung der hohen Strahlqualität.

Die Realisierung dieser beiden Ziele ist nicht trivial und insbesondere auch nicht durch die Leistungssteuerung des $CO_2$ -Lasers allein realisierbar. Dies hat folgende Gründe. Erstens ist aus Grundlagenuntersuchungen bekannt, dass für den Bohrprozess mit $CO_2$ -Laserstrahlung Pulse besonders gut geeignet sind, deren Dauer in der Größenordnung $10^{-5}$ s, aber auf alle Fälle unter 100 $\mu$s liegt. Solche Impulse besitzen einerseits bei Impuls-Spitzenleistungen im kW-Bereich, die effizient und flexibel mit $CO_2$-Lasern erzeugt werden können, eine Energie, bei der Abtragsraten beim Bohren z. B. von Stählen erreichbar sind, die einen zügigen Bohrprozess sichern. Andererseits sind sie bereits kurz genug, um ganz entscheidend die Bildung von unerwünschten hohen Schmelzanteilen zu verhindern und somit eine hohe Oberflächenqualität des Bohrlochs sicherzustellen. Pulse der gewünschten Dauer können mit der elektrischen Ansteuerung üblicher $CO_2$ -Laser nicht realisiert werden. Dort liegt die Grenze bei etwa 100 $\mu$s.

Ganz wesentlich ist in diesem Zusammenhang jedoch auch die Tatsache, dass bei der Erzeugung relativ kurzer Strahlungsimpulse mit der Steuerung des $CO_2$ -Lasers selbst keine optimale Strahlqualität erreicht werden kann. So wurde nachgewiesen, dass z. B. die K-Zahl der Strahlung in den ersten 100 $\mu$s eines elektrisch erzeugten Pulses wesentlich niedriger ist als beispielsweise die K-Zahl des eingeschwungenen Lasers, insbesondere des kontinuierlich strahlenden Lasers.

Aus diesen Gründen ist die Realisierung der externen Erzeugung der Strahlungsimpulse und Strahlungsimpulsfolgen in bevorzugter Weise gemäß Patentanspruch 6 dadurch möglich, dass die Formung der Strahlungsimpulse mittels eines Strahlungsmodulators erfolgt, der außerhalb des Laserresonators angeordnet ist, und im Prinzip so funktioniert, dass er entweder aus der kontinuierlichen Laserstrahlung oder aus den Strahlungsimpulsen, die der elektrisch gepulste $CO_2$ -Laser abgibt, Impulse "herausschneidet", die den Forderungen einer optimalen Wechselwirkung Laserstrahlung-Werkstoff beim Bohrprozess entsprechen. Solche Impulse sind vorzugsweise durch Symmetrie im Zeitverlauf der Leistung und relativ kleine Impulsdauern $\tau_{imp}$ im Größenordnungsbereich 1 $\mu$s $\leq \tau_{imp} \leq$ 100 $\mu$s charakterisiert.

Als Strahlungsmodulatoren, mit denen diese Forderungen realisiert werden können, eignen sich unterschiedliche Systeme, beispielsweise in der bevorzugten Ausführung gemäß Patentanspruch 7 akustooptische Modulatoren oder Interferenz-Laserstrahlungsmodulatoren. Speziell letztere haben sich für die in Frage stehende Impulsformung sehr gut bewährt und sollen deshalb im folgenden weiter betrachtet werden.

Die Formung der Impulse mit diesen Modulatoren kann z. B. gemäß Patentanspruch 8 auf folgende Weise realisiert werden: Sowohl der $CO_2$ -Laser als auch der Interferenz-Laserstrahlungsmodulator werden mittels synchronisierter Steuerimpulse aus einem gemeinsamen Taktgeber so angesteuert, dass zeitsynchron elektrisch gepulste Strahlung des $CO_2$ -Lasers erzeugt und andererseits der Modulator über seine Transmissionscharakteristik durchgestimmt wird. Diese beiden gleichzeitig ablaufenden Prozesse sind nun so zu synchronisieren, dass das Leistungsmaximum der "herausgeschnittenen" verkürzten Impulse, also das Überfahren des Transmissionsmaximums des Interferenz-Laserstrahlungsmodulators, genau mit dem Leistungsmaximum der elektrisch erzeugten Ausgangsimpulse des $CO_2$ -Lasers zusammenfällt. Dies kann über eine entsprechende Zeitverschiebung der Steuerimpulse für das Steuergerät des $CO_2$ -Lasers einerseits und die Modulatoransteuerung andererseits erfolgen. Auf diese Weise können die durch die externe Formung der Strahlungsimpulse und der Strahlungsimpulsfolgen geforderten Ziele dadurch optimal erfüllt werden, dass das Erreichen des Leistungsmaximums der elektrischen Impulse durch entsprechende Ansteuerung von vornherein so gewählt werden kann, dass es 100 bis 300 $\mu$s nach dem Anschwingen des Lasers erfolgt, also in einem Zeitbereich liegt, bei dem schon eine gute Strahlqualität des Lasers erreicht und die "irreguläre" Einschwingphase des Lasers vorüber ist. Es ist von großer Bedeutung, dass die Strahlanteile mit niedriger Strahlqualität, also die etwa ersten 100 μs des elektrisch angesteuerten Strahlungsimpulses, durch den externen Modulator ausgesondert werden und damit nicht die Fokussierung der Gesamtstrahlung insofern beeinträchtigen, dass speziell diese Strahlungsanteile, die ja schlechter fokussiert werden, z. B. zu einem unerwünschten Aufheizen und eventuell sogar Anschmelzen des Bohrlochrandes führen.

Im Rahmen des erfindungsgemäßen Verfahrensschrittes der externen Formung von Strahlungsimpulsen und Strahlungsimpulsfolgen ist auch noch eine weitergehende besonders bevorzugte Formung des Leistungsverlaufes während des gesamten Bohrprozesses anzusiedeln, nämlich die Variation der Spitzenleistung der jeweiligen Einzelimpulse des die Bohrung realisierenden Impulszuges in solch einer Weise, dass der Bohrprozess optimal abläuft (vgl. Patentanspruch 9).

Dies bedeutet, dass gemäß Patentanspruch 10 der Bohrprozess im Hinblick auf den zeitlichen Leistungsverlauf in drei Abschnitte unterteilt wird. In einem ersten Startabschnitt, welcher aus einer oder mehreren Serien von Pulsen, vorzugsweise 10 bis 100 Pulsen besteht, besitzt der erste Impuls eine Spitzenleistung, die der Abtragsschwelle des jeweiligen bearbeiteten Werkstoffes entspricht, während die Spitzenleistungen der folgenden Pulse sukzessiv erhöht werden. Auf diese Weise entsteht in dem ersten Bohrabschnitt eine Startbohrung von wenigen Zehntel mm Tiefe unter Vermeidung von Schmelzperlen und Debris.

In einem an den Startabschnitt anschließenden Bohrabschnitt werden eine oder mehrere Serien von Impulsen, vorzugsweise bestehend aus 10 bis 100 Impulsen, erzeugt, deren Spitzenleistungen so weit über denen des Startabschnitts liegen, dass ein Bohrloch in die Tiefe und bis zur Durchbohrung vorangetrieben wird.

An den Bohrabschnitt schließt sich ein Bohrlochformungsabschnitt an, der durch eine Weiterführung des Bohrprozesses mit maximaler Spitzenleistung gekennzeichnet ist. Die maximale Spitzenleistung ist derart charakterisiert, dass die in den vorangegangenen Startabschnitten und Bohrabschnitten gebildete Lochoberkante nicht wieder aufgeschmolzen wird, wobei die kombinierte Bewegung aus Rotation des Strahlenbündels um die Systemachse und des Strahlprofils um die Strahlachse verwendet wird, um die vorgegebene Lochform, beispielsweise einen nach unten erweiterten Konus, zu erzielen.

Bei modernen Systemen sind hier gemäß Patentanspruch 9 Leistungssteuerungen im Intervall zwischen 10% und 100% der maximalen Laserleistung möglich, was völlig ausreicht, um einen optimalen Verlauf der Spitzenleistung der Einzelimpulse für den gesamten Bohrprozess wie zuvor beschrieben zu sichern. Die Leistungssteuerung kann dabei mittels einer elektrischen Ansteuerung des $CO_2$-Lasers oder mittels eines zweiten Laserstrahlungsmodulators erfolgen.

Die extern erzeugte linear polarisierte Strahlung des $CO_2$-Lasers wird wie aus dem Stand der Technik prinzipiell bekannt durch geeignete Elemente in zirkular polarisierte Strahlung umgewandelt. Bekanntlich beeinflusst die Polarisation der Strahlung bei der Lasermaterialbearbeitung ganz wesentlich das Absorptionsverhalten. Insbesondere bestehen merkliche Unterschiede in der Strahlungsabsorption für die senkrecht und parallel zur absorbierenden Oberfläche polarisierte Laserstrahlung. Dies würde speziell beim Bohren runder Löcher bedeuten, dass beim Einsatz linear polarisierter Strahlung unweigerlich elliptische Querschnitte entstehen, die natürlich unzulässig sind, da sie im allgemeinen außerhalb der geforderten Rundheitstoleranzen der Bohrungen liegen. Dieses Problem wird durch das Erzeugen zirkular polarisierter Strahlung vermieden.

Eine zentrale Rolle in der vorliegenden Erfindung spielt die Sicherung der absoluten Rundheit der erzeugten Bohrung auch für den Fall, dass eventuell das Strahlprofil des eingesetzten $CO_2$-Lasers nicht 100%ig die dafür erforderliche Rotationssymmetrie aufweist. Aus der Praxis ist bekannt, dass dieser Fall meistens vorliegt und deswegen das Bohren mit dem "Rohstrahl" des Lasers unweigerlich zu mehr oder weniger starken Deformationen des Bohrlochs, die von der jeweiligen Verzerrung des Intensitätsprofils der Strahlung abhängen, führt.

Zur Vorbereitung der optimalen Wirkung der Verfahrensschritte, welche das Intensitätsprofil des Strahlenbündels um seine Strahlachse sowie das gesamte Strahlenbündel um die Systemachse rotieren, die diesen Effekt verhindern sollen, dient der Einsatz optischer Elemente, vorzugsweise gemäß Patentanspruch 5 einer Teleskopanordnung, zur optimalen Anpassung von Durchmesser und Divergenz des Strahlenbündels. Dies ist eine ganz wesentliche Voraussetzung dafür, dass das gesamte Strahlenbündel sauber in einem Fokusspot fokussiert wird und damit also auch tatsächlich die kleinstmöglichen Lochdurchmesser erreicht werden können.

Die Rotation des Intensitätsprofils des Strahlenbündels um seine Strahlachse wird durch eine geeignete Einheit realisiert. Das Ziel dieser Maßnahme ist klar: Die praktisch immer vorhandenen Einflüsse einer Abweichung des Intensitätsprofils von der Rotationssymmetrie können auf diese Weise beseitigt werden, wenn man voraussetzt, dass die Rotation des Intensitätsprofils um seine eigene Achse so schnell erfolgt, dass die Umlaufzeit klein ist gegen die Gesamtbohrzeit.

Die zweite Bedingung zur hohen Wirksamkeit des Verfahrens im Hinblick auf eine möglichst optimale rotationssymmetrische Verteilung der gesamten Strahlungsenergie des Impulszuges, der das Bohrloch generiert, ist die, dass zeitlich möglichst viele Pulse auf eine einzelne "Umdrehung" des Intensitätsprofils um seine Achse fallen, d. h. die Impulsfolgefrequenz sollte groß gegen die Rotationsfrequenz des Intensitätsprofils sein. Da letztere mittels einer mechanisch relativ großen Einheit realisiert wird, sollten dafür nicht mehr als größenordnungsmäßig 10 s$^{-1}$ angesetzt werden, so dass bei Impulsfolgefrequenzen größer ca. 200 Hz diese Bedingung gut zu erfüllen ist. Setzt man ferner für die Bohrzeit des Loches wenige Sekunden an - diese Zeit erfüllt die Anforderungen einer effizienten industriellen Fertigung - ist auch die erste Bedingung, dass möglichst viele (≥ 10) Rotationen des Intensitätsprofils um seine Achse während des gesamten Bohrprozesses erfolgen sollen, gut erfüllt.

Hat man die optimale "Rundheit" des Bohrlochs durch die vorstehend beschriebenen Verfahrensschritte prinzipiell gesichert, kann man sich in den aufeinander abgestimmten Schritten der Formung des Lochquerschnitts, also der Rotation des gesamten Strahlenbündels um die Systemachse mit anschließender Fokussierung des so geformten Strahlenbündels, beispielsweise einer definierten, zum Strahlaustritt hin erweiterten konischen Form zuwenden. Im Normalfalle, d.h. beim Bohren eines annähernd zylindrischen Loches, wird i. a. der Fokus der Strahlung auf die Oberfläche des Werkstückes gelegt. Durch die spezielle Wechselwirkung der Strahlung mit den Bohrlochwänden, insbesondere die Wellenleiterfunktion dieser Wände, entsteht dann ein Bohrloch, welches nicht etwa die Divergenz der Strahlung nach Passieren des Fokus' bei der üblichen Fokussierung widerspiegelt, sondern es entsteht ein mehr oder weniger präzise zylindrisches Loch. Wegen des Leistungsverlustes der Strahlung in Richtung größerer Tiefen im Werkstück ist es sogar typischerweise so, dass der Lochdurchmesser am Strahlaustritt geringer ist als am Strahleintritt. Will man nun eine zum Strahlaustritt hin erweiterte konische Form erzeugen, ist es erforderlich, die Strahlachse nicht senkrecht zur Werkstückoberfläche zu positionieren, sondern auf einem Kegel mit einem definierten Öffnungswinkel, um das Lot auf der Werkstückoberfläche rotieren zu lassen. Häufig wird dies dadurch realisiert, dass das Werkstück unter diesem definierten Winkel schräg gestellt wird und selbst rotiert. In vielen Fällen, z. B. auch bei den hier betrachteten Einspritzdüsen, ist diese Variante jedoch technologisch sehr ungünstig bzw. in der Praxis überhaupt nicht realisierbar. Dann muss der definierte Winkel der Strahlachse zum Lot auf die Werkstückoberfläche durch die optischen Mittel der Strahlformung und Fokussierung erzeugt werden. Zunächst ist dafür zu sorgen, dass eine Rotation des gesamten Strahlenbündels um die Systemachse mit definiertem, aber frei einstellbarem Abstand sowie Winkel zwischen der Achse des Strahlenbündels und der Systemachse realisiert wird und zwar dergestalt, dass bei der anschließenden Fokussierung des so geformten Strahlenbündels mittels der Fokussieroptik auf die gewünschte Bearbeitungsstelle gewährleistet ist, dass einerseits alle Strahlanteile im Fokusspot an der Werkstückoberfläche vereinigt werden und andererseits die Divergenz der Strahlung nach Passieren des Fokusspots so angepasst ist, dass die gewünschte Lochform, z. B. eben eine zum Strahlaustritt hin erweiterte konische Form, entsteht. Bei diesem Grundprinzip ist dafür zu sorgen, dass alle Strahlanteile des rotierenden Bündels, die die Linse treffen, aus einem gemeinsamen virtuellen Gegenstandspunkt kommen, so dass sie durch die Linse auch wieder sauber in einem definierten Bildpunkt, nämlich dem Fokusspot, gesammelt werden. Dazu ist es notwendig, dass die Parameter Abstand und Winkel zwischen der Achse des Strahlenbündels und der Systemachse einerseits sowie Divergenz des Strahlenbündels andererseits aufeinander abgestimmt sind. Diesem Zwecke dient die vorgesehene Divergenzanpassung durch geeignete optische Elemente, z. B. eine Teleskopanordnung.

Dieses Grundprinzip kann nun auf verschiedenste Weisen realisiert werden. Z. B. können durch ein komplexes Rotationsmodul die Rotation des Intensitätsprofils des Strahlenbündels um seine Strahlachse einerseits und die Rotation des gesamten Strahlenbündels um die Systemachse andererseits zusammengefasst werden. Dazu kann in einer bevorzugten Ausgestaltung gemäß Patentanspruch 12 bzw. 24 eine drehbar gelagerte 5-Spiegel-Anordnung dienen, die als eine Art "optisches Getriebe" wirkt und in einer bevorzugten Ausführungsvariante gemäß Patentanspruch 13 bzw. 25 die Rotation des Intensitätsprofils um die Strahlachse mit der doppelten Rotationsgeschwindigkeit $2\omega_1$ des Rotationsmoduls und die wahlweise einstellbare Rotation des Strahlenbündels um die Systemachse mit der einfachen Rotationsgeschwindigkeit $\omega_1$ des Rotationsmoduls bewirkt.

Ein gewisser Nachteil ist hierbei jedoch die feste Relation zwischen diesen beiden Rotationsgeschwindigkeiten. Besitzt das Strahlenbündel eine merklich von der Rotationssymmetrie abweichende Intensitätsverteilung, kann dies dazu führen, dass über Schwebungseffekte zwischen den beiden Rotationsgeschwindigkeiten Welligkeiten in der Bohrlochwand entstehen und die gewünschte absolute Rundheit des Bohrloches wesentlich beeinträchtigt wird. Aus diesem Grunde ist es vorteilhaft, alternativ gemäß Patentanspruch 13 bzw. 28 die beiden Einheiten zur Rotation des Intensitätsprofils um die Strahlachse einerseits und die Rotation des Strahlenbündels um die Systemachse andererseits voneinander zu trennen und die beiden Rotationsgeschwindigkeiten so aufeinander abzustimmen, dass sie inkommensurabel sind, so dass solche Schwebungseffekte und damit Unrundheiten der Bohrlochwand, die darauf zurückzuführen sind, vermieden werden. Ein weiterer Vorzug der Trennung der beiden Rotationen voneinander, d.h. deren Realisierung durch zwei getrennte Einheiten, ist der, dass weitgehende Freizügigkeit im Hinblick speziell auf die Realisierung der Rotation des gesamten Strahlenbündels um die Systemachse, besteht. Dies kann z. B. erforderlich sein, wenn besonders große Winkel zwischen der Strahlachse und der Systemachse am Orte des Fokusspots erforderlich sind, wenn also ein konisches Loch mit besonders großem Öffnungswinkel erzeugt werden muss.

Hat man auf diese Weise die prinzipielle Form des Bohrloches definiert, dienen die weiteren erfindungsgemäßen Verfahrensschritte gemäß Patentanspruch 1 der Sicherung einer optimalen Kantenqualität an Lochober- und -unterseite sowie dem Schutz der das Loch umgebenen Werkstückoberfläche vor Materialspritzern, rekondensierendem Materialdampf sowie unerwünschtem Wärmeeinfluss.

Der Einsatz eines geeigneten Arbeits- und Schutzgases für den Bohrprozess zum Beblasen der Umgebung des Fokusspots ist für die Erzielung einer hohen Oberflächenqualität der Bohrlochwände unerlässlich. Als Arbeits- und Schutzgas können Inertgase, Sauerstoff oder Gemische aus beiden dienen. Ihre Wirkung beruht beim Sauerstoff z. B. im Einbringen einer zusätzlichen Energiequelle durch die exotherme Reaktion des Gases beispielsweise mit Eisenwerkstoffen oder im Falle von Inertgasen in einer glättenden Wirkung des heißen Plasmas, welches aus dem Arbeitsgas durch die intensive Laserstrahlung gebildet wird und direkten Kontakt mit der Werkstückoberfläche besitzt.

Besonders bevorzugt sind gemäß Patentanspruch 3 Gasmischungen aus Sauerstoff und einem Edelgas, beispielsweise Argon, die beide Effekte optimal miteinander verknüpfen. Durch die Sauerstoffbeigabe wird vor allen Dingen erreicht, dass die unvermeidlichen Schmelzanteile durch den großen Energieeintrag und die rasche Oxidation der heißen Schmelze daran gehindert werden, größere Schmelzperlen und Schmelzablagerungen zu bilden, so dass sowohl die Bohr-lochinnenwände als auch die Oberflächen an Lochober- und -unterseite von größeren Schmelzrückständen freigehalten werden. Die Optimierung des Arbeitsgases spielt gerade bei der Herstellung von Präzisionsbohrungen wie denen in Kraftstoffeinspritzdüsen eine ganz entscheidende Rolle, da die Beeinflussung der Oberflächenqualität der Bohrung selbst und ihrer Umgebung durch Schmelzanteile unbedingt auf ein Minimum reduziert werden muss.

In Kombination mit dem dreistufigen Bohrprozess wird gemäß Patentanspruch 11 eine Anpassung des Drucks, mit welchem das Arbeitsgas auf die Umgebung des Fokusspots geblasen wird, an die verschiedenen Stufen des Bohrprozesses bevorzugt. Im Startabschnitt des Bohrprozesses sind die einzelnen Impulsserien durch einen niedrigen Gasdruck im Bereich zwischen 0 und 1 bar charakterisiert. In den Bohrpausen werden Debris und unerwünschte Schmelzanteile bei hohem Gasdruck im Bereich von 1 bis 20 bar ausgeblasen. Zusätzlich sind der Bohr- und der Bohrlochformungsabschnitt durch ein stetiges Anwachsen des Drucks vom Anfangsdruck, welcher im Startabschnitt des Bohrprozesses verwendet wird, bar bis auf Endwerte von bis zu maximal 20 bar charakterisiert.

Auch die effiziente Unterdrückung der Strahlungsrückkopplung zwischen Werkstück und $CO_2$-Laser mittels einer wellenlängenselektiven Entkopplungseinheit dient der Sicherung der hohen Bohrlochqualität. Da der Laser auf der einen und das Werkstück auf der anderen Seite ein strahlungsgekoppeltes System darstellen, wird bekanntlich die Laserfunktion durch die Strahlungsrückkopplung stark beeinträchtigt, so dass das System zu parasitären Oszillationen neigt. Diese sind besonders am Anfang der Bearbeitung, wenn das Werkstück als quasi-ebener Spiegel wirkt, und beim elektrisch gepulsten Betrieb des Lasers sehr intensiv. Die bekannten und bisher eingesetzten Maßnahmen für diese Entkopplung basieren auf der Kopplung zwischen einem $\lambda/4$-Phasenschieber und einem ATFR-Spiegel im Strahlengang. Da die Wirkung des ATFR-Spiegels jedoch wellenlängenabhängig ist, zeigten sich immer wieder Mängel in der Wirkung dieses Systems dadurch, dass der $CO_2$-Laser auf andere Wellenlängenbereiche ausweicht, z.B. auf die 9,2 oder 9,6 $\mu$m-Bande. Daher wird erfindungsgemäß nach Patentanspruch 38 zusätzlich ein wellenlängenselektives (und somit frequenzselektives) Element in den Strahlengang eingebracht, welches ein derartiges Ausweichen verhindert.

In einer bevorzugten Ausgestaltung des erfindungsgemäßen Verfahrens gemäß Patentanspruch 1 bzw. der erfindungsgemäßen Vorrichtung gemäß Patentanspruch 20 wird zur Sicherung einer optimalen Kantenqualität an der Lochoberseite sowie zum Schutz der das Loch umgebenden Werkstückoberfläche vor Materialspritzern, rekondensierendem Materialdampf sowie unerwünschtem Wärmeeinfluss zusätzlich eine eng an der Oberfläche des Werkstückes anliegenden Schutzfolie, vorzugsweise eine metallische Schutzfolie, besonders bevorzugt eine Aluminium- oder Kupferfolie, verwendet. Die Dicke der Schutzfolie ist dabei so anzupassen, dass für ihre Durchbohrung nur ein kleiner Bruchteil der in einem einzelnen Strahlungsimpuls zur Verfügung stehenden Energie erforderlich ist. Bevorzugt beträgt dazu gemäß Patentanspruch 36 die Dicke der Schutzfolie 10 bis 20 $\mu$m.

Je nach den technologischen Anforderungen kann diese Schutzfolie für einen ganzen Impulszug stationär gehalten werden, so dass stets das gleiche Durchschussloch genutzt wird. Da in diesem Fall nach mehrere Impulsen der Schutzeffekt der Schutzfolie jedoch verringert wird, wird in einer bevorzugten Ausführung gemäß Patentanspruch 15 der Erfindung die Schutzfolie so schnell während des Bohrprozesses von Puls zu Puls weiterbewegt, dass die Strahlung jeweils auf ein noch nicht mit Strahlung beaufschlagtes Flächenelement dieser Folie trifft, d. h. jeder Puls bohrt sich durch die Schutzfolie wieder neu sein Durchtrittsloch.

Das erfindungsgemäße Verfahren und die erfindungsgemäße Vorrichtung sind nachstehend anhand der Figuren 1 bis 16 näher erläutert.

Figur 1 zeigt die Gesamtanordnung zum Bohren feinster Löcher mittels $CO_2$-Laser gemäß der vorliegenden Erfindung.

Figur 2 illustriert die Pulsformung mittels synchroner Ansteuerung von $CO_2$-Laser und Interferenz-Laserstrahlungsmodulator.

Figur 3 veranschaulicht das Prinzip des Bohrens mit rotierendem Strahlbündel.

Figur 4 illustriert den schematischen Strahlengang im Rotationsmodul zur simultanen Realisierung einer Rotation des Intensitätsprofils des Strahlenbündels um seine Strahlachse und einer Rotation des gesamten Strahlenbündels um die Systemachse mit definiertem Abstand und Winkel zwischen der Achse des Strahlenbündels und der Systemachse.

Figur 5 zeigt das Prinzip der Justierung von Lage und Richtung des ausgekoppelten Strahls im Rotationsmodul.

Figur 6 und Figur 7 zeigen eine Ausführungsform des Rotationsmoduls in zwei verschiedenen Ansichten.

Figur 8 illustriert das Bohren mit einer Kombination aus Rotationsmodul und rotierenden Bearbeitungskopf.

Figur 9 illustriert das bekannte Prinzip des definierten Strahlversatzes durch eine planparallele Platte.

Figur 10 veranschaulicht die Erzeugung einer Rotation des Strahlbündels mittels einer planparallelen Platte.

Figur 11 zeigt die Erzeugung einer Rotation des Strahlbündels mittels einer Kombination aus Taumelspiegel und Axicon in einer ersten Ausführungsform.

Figur 12 zeigt die Erzeugung einer Rotation des Strahlbündels mittels einer Kombination aus Taumelspiegel und Axicon in einer zweiten Ausführungsform.

Figur 13 veranschaulicht die Erzeugung einer Rotation des Strahlbündels mittels einer Kombination aus x-y-Scanner und Axicon.

Figur 14 veranschaulicht das Prinzip des Schutzes der Lochoberseite mittels einer bewegten Schutzfolie.

Figur 15 illustriert den Schutz von dem Bohrloch gegenüberliegenden Wänden mittels strömenden absorbierenden Fluids.

Figur 16 zeigt eine Ausführung des Schutzes gegenüberliegender Wände mittels absorbierenden Fluids beim Bohren von Einspritzdüsen.

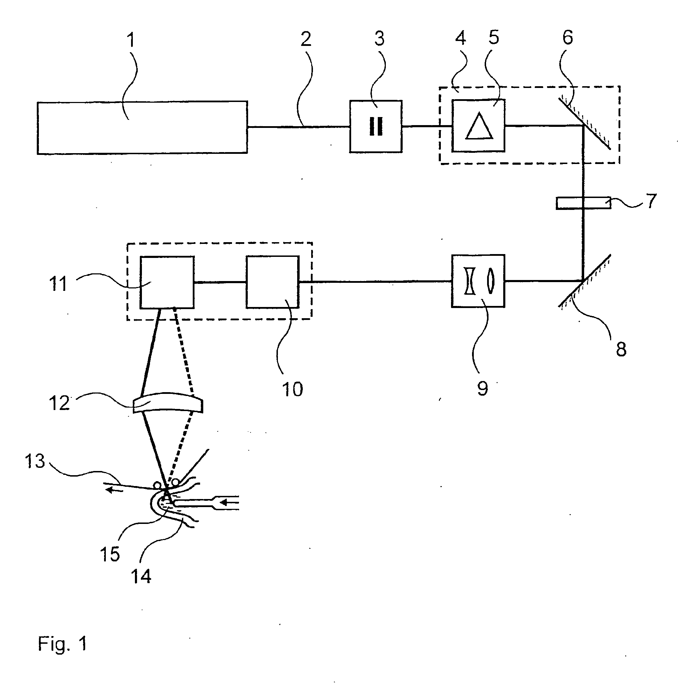

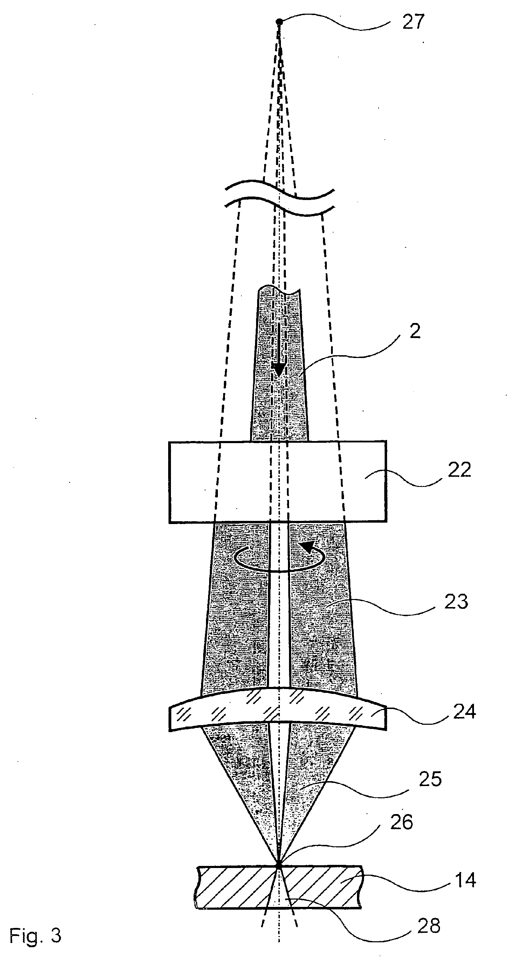

Figur 1 illustriert zunächst das Zusammenwirken aller relevanten Komponenten für die Durchführung der Verfahrensschritte des erfindungsgemäßen Verfahrens. Ein in einem leistungsstarken $CO_2$-Laser 1 mit einer hohen Strahlqualitätskennzahl K nahe 1 erzeugter $CO_2$-Laserstrahl 2 wird durch einen Interferenz-Strahlungsmodulator 3 so geformt, dass die für den Bohrprozess erforderlichen optimalen Impulse entstehen. Anschließend passiert der $CO_2$-Laserstrahl 2 eine symbolisch dargestellte Einheit 4 zur wellenlängenselektiven Unterdrückung der Strahlungsrückkopplung, die aus einem wellenlängenselektiven optischen Element 5 und einem ATFR-Spiegel 6 besteht. Das wellenlängenselektive Element 5 kann dabei beispielsweise aus einem Prisma, einem Gitter oder einem oder mehreren wellenlängen- und somit frequenzselektiven Spiegeln gebildet werden. Die Position der Elemente 5 und 6 im Strahlengang ist nicht fest vorgeschrieben, so dass sie wie in Figur 1 dargestellt außerhalb des $CO_2$-Lasers 1 angeordnet, aber auch in den $CO_2$-Laser 1 integriert werden können. Ein darauf folgender $\lambda/4$-Phasenschieber 7 hat eine Doppelfunktion: Er dient erstens der Umformung der linear polarisierten Laserstrahlung 2 in zirkular polarisierte und zweitens im Zusammenwirken mit der Einheit 4 der wellenlängenselektiven Unterdrückung der Strahlungsrückkopplung. Im Anschluss an den $\lambda/4$-Phasenschieber 7 folgt ein weiterer Umlenkspiegel 8. Ein anschließend durchstrahltes Teleskop 9 dient der Anpassung insbesondere von Durchmesser und Divergenz des Strahlenbündels an den dynamischen Prozess seiner Fokussierung auf ein Werkstück 14, dem eine Einheit 10 zur Rotation des Intensitätsprofils um die Strahlachse und eine Einheit 11 zur Rotation des so geformten Strahlenbündels um die Systemachse mit definiertem, aber frei einstellbarem Abstand sowie Winkel zwischen der Achse des Strahlenbündels und der Systemachse vorgelagert sind. Die Reihenfolge der Einheiten 10 und 11 ist dabei beliebig. Eine Fokussierlinse 12 vereinigt die Strahlungsanteile in einem Fokusspot 26 (vgl. Figur 3) an der Werkstückoberfläche, wobei zum Schutz dieser Werkstückoberfläche eine Schutzfolie 13 dient. Eine an der Werkstückunterseite entlangströmende Flüssigkeit 15 dient dazu, die durch das Bohrloch hindurchtretende $CO_2$-Laserstrahlung 2 zu absorbieren und damit die dem Bohrloch gegenüberliegende Wand vor unerwünschten thermischen Effekten zu schützen.

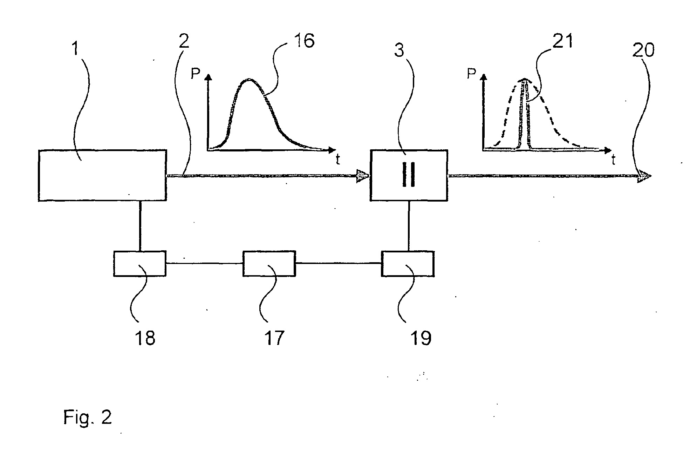

Figur 2 illustriert die Erzeugung von Strahlungsimpulsen definierter Form in dem Interferenz-Laserstrahlungsmodulator 3 gemäß dem erfindungsgemäßen Verfahren. Das Grundprinzip dieser Formung ist folgendes: Von einem gemeinsamen Taktgeber 17 werden synchronisierte Steuerimpulse sowohl für ein Steuergerät 18 des $CO_2$-Lasers 1 und als auch für eine Modulatoransteuerung 19 des Interferenz-Laserstrahlungsmodulators 3 abgegeben. Über das Steuergerät 18 wird der $CO_2$-Laser 1 elektrisch gepulst und zur Abgabe von Impulsen mit einem typischen Zeitverlauf 16 angeregt. Aus diesen Impulsen wird mittels des Interferenz-Laserstrahlungsmodulators 3 ein wesentlich schmalerer Bereich mit einem zeitlichen Leistungsverlauf 21 herausgeschnitten, der einerseits lediglich Strahlungsanteile guter Strahlqualität enthält und andererseits in seiner Pulsdauer so angepasst ist, dass eine optimale Wechselwirkung mit dem Werkstück im Bohrprozess gesichert wird.

Dazu werden sowohl der $CO_2$-Laser 1 als auch der Interferenz-Laserstrahlungsmodulator 3 mittels synchronisierter Steuerimpulse aus dem gemeinsamen Taktgeber 17 so angesteuert, dass zeitsynchron elektrisch gepulste Strahlung des $CO_2$-Lasers 1 erzeugt und andererseits der Interferenz-Laserstrahlungsmodulator 3 über seine Transmissionscharakteristik durchgestimmt wird. Diese beiden gleichzeitig ablaufenden Prozesse sind nun so zu synchronisieren, dass das Leistungsmaximum der "herausgeschnittenen" verkürzten Impulse, also das Überfahren des Transmissionsmaximums des Interferenz-Laserstrahlungsmodulators, genau mit dem Leistungsmaximum der elektrisch erzeugten Ausgangsimpulse des $CO_2$-Lasers 1 zusammenfällt. Dies kann über eine entsprechende Zeitverschiebung der Steuerimpulse für das Steuergerät 18 des $CO_2$-Lasers 1 einerseits und die Modulatoransteuerung 19 andererseits erfolgen. Auf diese Weise können die durch die externe Formung der Strahlungsimpulse und der Strahlungsimpulsfolgen geforderten Ziele dadurch optimal erfüllt werden, dass das Erreichen des Leistungsmaximums der elektrischen Impulse durch entsprechende Ansteuerung von vornherein so gewählt werden kann, dass es 100 bis 300 μs nach dem Anschwingen des $CO_2$-Lasers 1 erfolgt, also in einem Zeitbereich liegt, bei dem schon eine gute Strahlqualität des Lasers erreicht und die "irreguläre" Einschwingphase des $CO_2$-Lasers 1 vorüber ist. Es ist von großer Bedeutung, dass die Strahlanteile mit niedriger Strahlqualität, also die etwa ersten 100 μs des elektrisch angesteuerten Strahlungsimpulses, durch den Interferenz-Laserstrahlungsmodulator 3 ausgesondert werden und damit nicht die Fokussierung der Gesamtstrahlung insofern beeinträchtigen, dass speziell diese Strahlungsanteile, die ja schlechter fokussiert werden, z. B. zu einem unerwünschten Aufheizen und eventuell sogar Anschmelzen des Bohrlochrandes führen. Dazu ist, wie in Figur 2 dargestellt, der Interferenz-Laserstrahlungsmodulator 3 außerhalb des Resonators des $CO_2$-Lasers 1 angeordnet. Im Ergebnis liefert der Interferenz-Laserstrahlungsmodulator 3 einen gepulsten $CO_2$-Laserstrahl 20.

In den Figuren nicht dargestellt ist die bevorzugte Pulsfolge für ein optimales Bohren eines Bohrlochs 28. Bevorzugt wird der Bohrprozess in drei Abschnitte gegliedert, in welchen die Spitzenleistungen der jeweiligen Einzelimpulse variiert werden, um den Bohrloch zu optimieren.

Der Bohrprozess beginnt mit einem Startabschnitt, welcher aus einer oder mehreren Serien von Pulsen, vorzugsweise in jeder Serien aus 10 bis 100 Pulsen besteht. Der erste Impuls weist eine Spitzenleistung auf, die der Abtragsschwelle des jeweiligen bearbeiteten Werkstoffes entspricht, während die Spitzenleistungen der folgenden Pulse sukzessiv erhöht werden. Auf diese Weise entsteht in dem ersten Bohrabschnitt eine Startbohrung von wenigen Zehntel mm Tiefe unter Vermeidung von Schmelzperlen und Debris.

In einem an den Startabschnitt anschließenden Bohrabschnitt werden eine oder mehrere Serien von Impulsen, wobei jede Serie vorzugsweise ebenfalls aus 10 bis 100 Impulsen besteht, erzeugt, deren Spitzenleistungen so weit über denen des Startabschnitts liegen, dass ein Bohrloch in die Tiefe und bis zur Durchbohrung vorangetrieben wird.

An den Bohrabschnitt schließt sich ein Bohrlochformungsabschnitt an, der durch eine Weiterführung des Bohrprozesses mit maximaler Spitzenleistung gekennzeichnet ist. Die maximale Spitzenleistung ist derart charakterisiert, dass die in den vorangegangenen Startabschnitten und Bohrabschnitten gebildete Lochoberkante nicht wieder aufgeschmolzen wird, wobei die kombinierte Bewegung aus Rotation des Laserstrahls um die Systemachse und des Strahlprofils um die Strahlachse verwendet wird, um die vorgegebene Lochform, beispielsweise einen nach unten erweiterten Konus, zu erzielen.

Die Spitzenleistung der jeweiligen Einzelimpulse des die Bohrung realisierenden Impulszuges kann entweder mittels der elektrischen Ansteuerung 18 des $CO_2$-Lasers 1 oder mittels eines nicht dargestellten zweiten Interferenz-Laserstrahlmodulators im Intervall zwischen 10% und 100% der maximalen Laserleistung geregelt werden.

Figur 3 illustriert einen ganz entscheidenden Faktor beim Bohren eines Bohrlochs 28 definierter Form mit einem rotierenden Laserstrahl 23 in das Werkstück 14. Um zu erreichen, dass alle Strahlanteile des $CO_2$-Laserstrahls 2, unabhängig von ihrem jeweiligen Auftreffort auf einer Fokussierlinse 24, auch präzise in einem fokussierten Laserstrahl 25 im Fokusspot 26 gesammelt werden, ist dafür zu sorgen, dass die Divergenz der Strahlanteile des rotierenden Laserstrahls 23 so beschaffen ist, dass scheinbar alle Strahlanteile aus einem virtuellen Ausgangspunkt 27 der Laserstrahlung kommen. Dieser Punkt ist dann der Gegenstandspunkt der Fokussierlinse 24, der durch die Fokussierlinse 24 sauber in den Fokusspot 26 abgebildet wird. In dieser Darstellung wurde angenommen, dass die Erzeugung einer Rotation des Intensitätsprofils um die Strahlachse und einer Rotation des Strahlenbündels um die Systemachse gemeinsam in einem Rotationsmodul 22 realisiert werden.

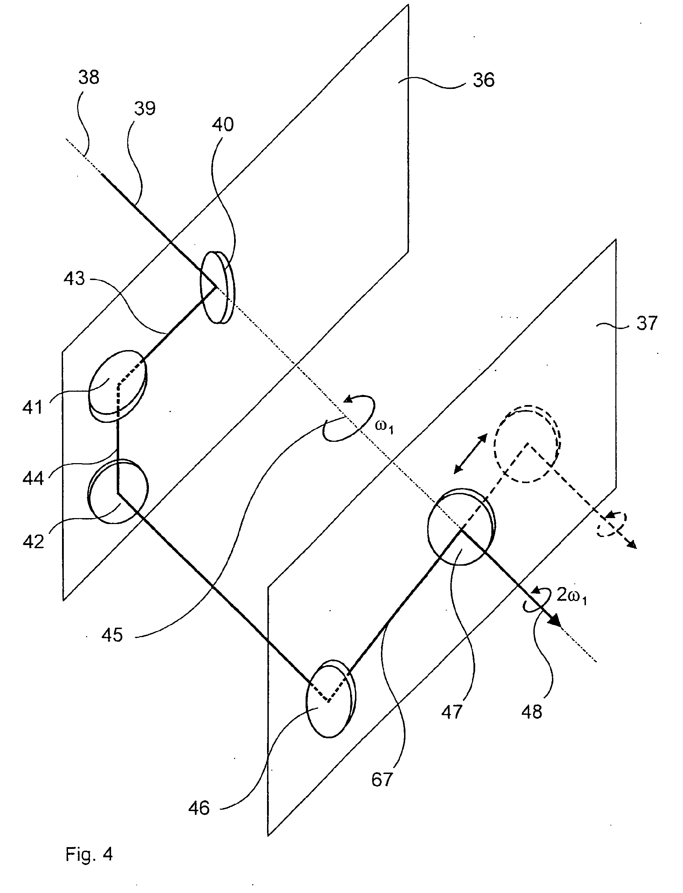

Die Wirkungsweise dieses Rotationsmoduls 22 mit seiner kombinierten Wirkung zur Rotation des $CO_2$-Laserstrahls 2 sowohl um seine eigene Achse als auch um die Systemachse wird in der schematischen Darstellung in Figur 4 näher erläutert. Er besteht aus fünf Spiegeln 40, 41, 42, 46, 47, wobei die ersten drei Spiegel 40, 41, 42 in einer ersten Funktionsebene 36 angeordnet sind, die senkrecht zur Strahlachse 38 eines einfallenden Strahls 39 angeordnet sind. Bei dem einfallenden Strahl 39 handelt es sich um den mittels des Interferenz-Laserstrahlungsmodulators 3 gepulsten $CO_2$-Laserstrahl 20. Die Strahlachse 38 des einfallenden Strahls 39 definiert dabei eine Rotationsachse 45 des Rotationsmoduls 22.

Der erste Spiegel 40 lenkt den einfallenden Strahl 39 um 90° in einem Strahlelement 43 auf den zweiten Spiegel 41, dieser lenkt das von dem ersten Spiegel 40 reflektierte Strahlelement 43 wieder um 90° in einem Strahlelement 44 auf den dritten Spiegel 42 und zwar so, dass die beiden Strahlelemente 43 und 44 des Laserstrahls in dieser ersten Funktionsebene 36 liegen. Der dritte Spiegel 42 lenkt das einfallende Strahlelement 44 wieder um 90° senkrecht aus der ersten Funktionsebene 36 heraus in Richtung einer zweiten Funktionsebene 37 des Rotationsmoduls 22. Diese Funktionsebene 37 steht ebenfalls senkrecht zur ursprünglichen Strahlachse 38 und damit auch zur Rotationsachse 45 des Rotationsmoduls 22. In dieser Funktionsebene 37 befinden sich der vierte Spiegel 46 und der fünfte Spiegel 47, welcher im folgenden auch als Auskoppelspiegel 47 des Rotationsmoduls 22 bezeichnet wird. Der vierte Spiegel 46 reflektiert den von dem dritten Spiegel 42 reflektierten Strahl wieder um 90° in einem Strahlelement 67 innerhalb dieser zweiten Funktionsebene 37 in Richtung der Rotationsachse 45 auf den Auskoppelspiegel 47, wobei letzterer so angeordnet ist, dass er das vom vierten Spiegel 45 reflektierte Strahlelement 67 um 90° oder wahlweise einen anderen Winkel aus dem Rotationsmodul 22 in einen ausgekoppelten Strahl 48 lenkt.

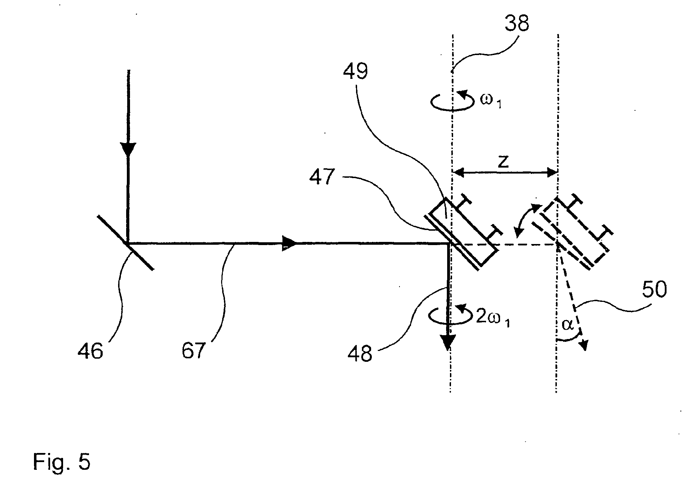

Liegt der Auskoppelspiegel 47 auf der Rotationsachse 45 und somit auf der Strahlachse 38 des einfallenden Strahls 39 und wird das vom vierten Spiegel 45 reflektierte Strahlelement 67 von dem Auskoppelspiegel 47 um 90° in den ausgekoppelten Strahl 48 gelenkt, stimmen die Achsen 38 des einfallenden Strahls 39 und die Achse des ausgekoppelten Strahls 48 überein, so dass eine Drehung des Rotationsmoduls 22 um die Rotationsachse 45 mit einer Kreisfrequenz $\omega 1$ eine Drehung des ausgekoppelten Strahls 48 um seine eigene Achse mit der Kreisfrequenz $2\omega 1$ bewirkt (vgl. auch Figur 5). Der Auskoppelspiegel 47 hat eine Justiermöglichkeit 49 (vgl. Figur 5) von Lage und Richtung des ausgekoppelten Strahls 48. Eine zusätzliche Rotation des ausgekoppelten Strahls 48 um die Systemachse, wenn diese Systemachse nicht identisch mit der Strahlachse des ausgekoppelten Strahls ist, wird durch diese Justiermöglichkeit 49 des Auskoppelspiegels 47 ermöglicht.

Figur 5 illustriert die Wirkung dieser Justiermöglichkeit 49 von Lage und Richtung des ausgekoppelten Strahls 48 im Rotationsmodul 22 etwas genauer. Die entscheidenden Größen für die Wirkung des Strahlenbündels bei der Fokussierung sind eine Verschiebung z und ein Winkel $\alpha$. Z ist die Verschiebung der Achse des aus dem Rotationsmodul 22 ausgekoppelten Strahls 48 gegen die Systemachse, $\alpha$ ist die Richtungsänderung des aus dem Rotationsmodul 22 ausgekoppelten Strahls 48. Wird der Auskoppelspiegel 47 um die Verschiebung z verschoben und um den Winkel $\alpha$ gekippt, erhält man einen in Lage und Richtung ausgelenkten ausgekoppelten Strahl 50.

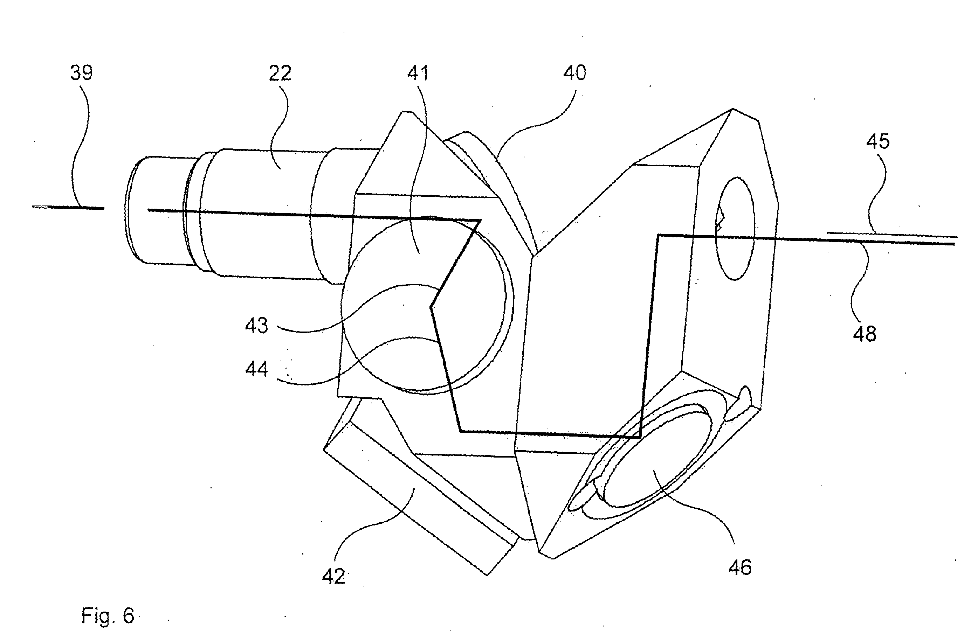

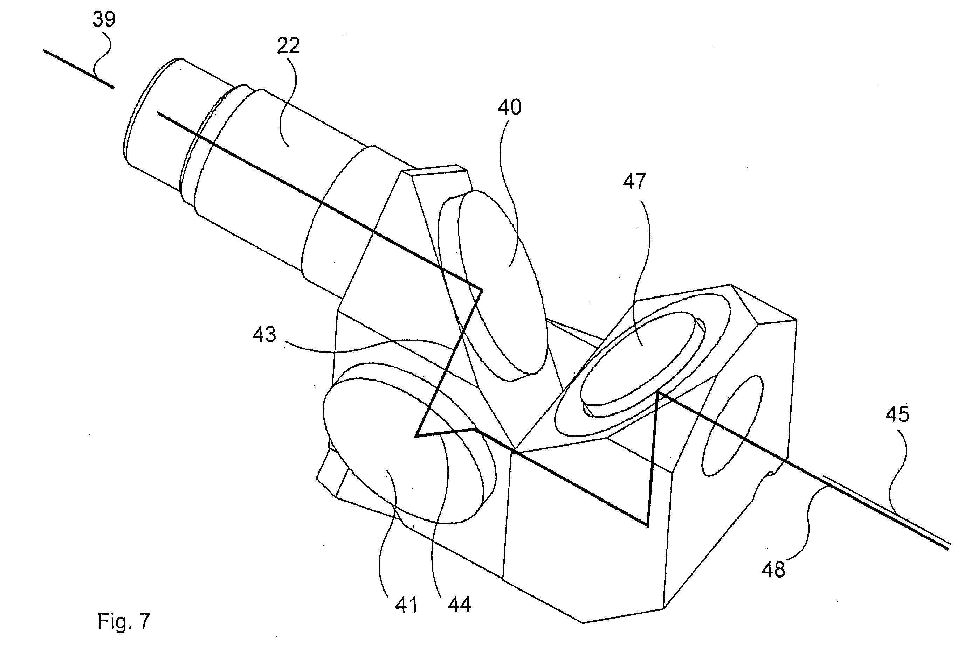

Die Figuren 6 und 7 zeigen zwei verschiedenen Ansichten einer spezielle Ausführungsform des in Figur 4 beschriebenen Rotationsmoduls 22 in dreidimensionaler Darstellung. Gleiche Teile werden dabei mit gleichen Bezugsziffern gekennzeichnet. Die erforderlichen Antriebselemente zur Rotation dieses Systems um seine Rotationsachse 45 sind in diesen Darstellungen nicht enthalten. Um die anhand von Figur 4 beschriebenen Umlenkungen des einfallenden Strahls 39 zu erreichen, ist in den Figuren 6 und 7 ersichtlich, dass die Spiegel 40, 41, 42 in der ersten Funktionsebene 36, die Spiegel 46 und 47 in der zweiten Funktionsebene 37 des Rotationsmoduls angeordnet, jedoch gegen die Funktionsebenen 36 bzw. 37 geneigt sind.

Es ist ersichtlich, dass das Rotationsmodul 22 eine beträchtliche Masse besitzt (allein schon wegen der fünf erforderlichen Spiegel 40, 41, 42, 46, 47) und deswegen seine Rotation bei vernünftigem Aufwand nur mit moderaten Geschwindigkeiten erfolgen kann. Kreisfrequenzen $\omega_1$ des Systems in der Größenordnung 10 s$^{-1}$ sind jedoch problemlos realisierbar.

Die Erzeugung konischer Löcher nach dem in Figur 3 dargestellten Grundprinzip stößt an Grenzen, wenn der Konuswinkel relativ groß, beispielsweise größer als 20°, sein muss. Dann ist eine solch große Verschiebung z der Achse des aus dem Rotationsmodul 22 ausgekoppelten Strahls 48 gegen die Systemachse erforderlich, dass beim Prozess der Fokussierung mittels der Fokussierlinse 24 in hohem Maße die Abbildungsfehler der Fokussierlinse 24 zum Tragen kommen, so dass die Fokussierung merklich verschlechtert und damit der erreichbare minimale Bohrlochdurchmesser in unerwünschter Weise vergrößert wird. Ein weiterer Nachteil des Rotationsmoduls 22 mit seiner kombinierten Wirkung zur Rotation des $CO_2$-Laserstrahls 2 sowohl um seine eigene Achse als auch um die Systemachse, welches somit die Einheit 10 zur Rotation des Intensitätsprofils und die Einheit 11 zur Rotation des Strahlenbündels um die Systemachse kombiniert, liegt darin, dass die Kreisfrequenz $2\omega_1$ der Rotation des $CO_2$-Laserstrahls 2 um seine eigene Achse ein Vielfaches (das Doppelte) der Kreisfrequenz $\omega_1$ des Rotationsmoduls ist, welche in dieser Ausgestaltung der Kreisfrequenz des $CO_2$-Laserstrahls 2 um die Systemachse entspricht, was Schwebungseffekte hervorrufen kann, welche die Rundheit des Bohrlochs 28 beeinträchtigen. Um diesen Effekt zu vermeiden, ist eine Trennung der beiden Einheiten 10 und 11 vonnöten.

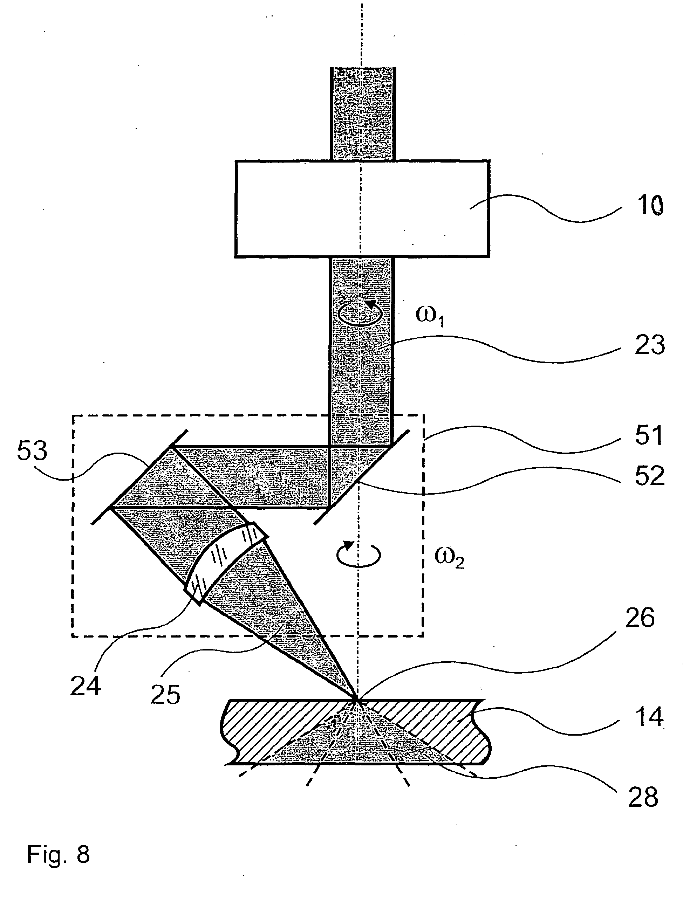

Für solche Fälle zeigt Figur 8 einen Ausweg. Hier wird das Rotationsmodul 22 nur benutzt, um das Intensitätsprofil des Laserstrahls 23 um seine Achse mit der Kreisfrequenz $\omega_1$ rotieren zu lassen, so dass das Rotationsmodul 22 als Einheit 10 zur Rotation des Intensitätsprofils fungiert. Die Rotation des gesamten rotierenden Laserstrahls 23 um die Systemachse wird jedoch mittels eines mit einer Kreisfrequenz $\omega_2$ rotierenden Bearbeitungskopfes 51 realisiert, welcher somit die Einheit 11 zur Rotation des Strahlenbündels um die Systemachse bildet. Der Bearbeitungskopf 51 besteht aus zwei Umlenkspiegeln 52 und 53 sowie der Fokussierlinse 24. Die Abbildung 8 zeigt, wie durch Rotation des Bearbeitungskopfes 51 auch sehr große Winkel zwischen dem Lot auf das Werkstück 14 im Fokusspot 26 und der Einstrahlachse des fokussierten Laserstrahls 25 realisiert werden können, ohne dass sich Abbildungsfehler der Linse 24 auswirken. Somit sind große Öffnungswinkel des Bohrlochs 28 realisierbar. Auch hier ist natürlich wieder zu beachten, dass insgesamt relativ große Massen rotieren, so dass das $\omega_2$ keine allzu großen Werte annehmen sollte. Auch hier sind jedoch Rotationsgeschwindigkeiten möglich, die für das Verfahren vollkommen ausreichend sind, z. B. wieder ca. 10 Umdrehungen/s.

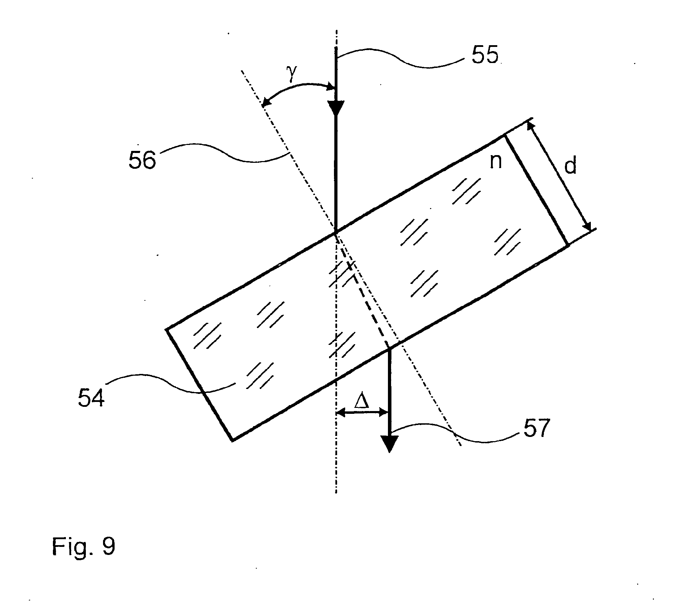

Die Figuren 9 bis 13 zeigen weitere Ausführungsformen zur Rotation des Strahlbündels um die Systemachse separiert von der Vorrichtung zur Rotation des Intensitätsprofils.

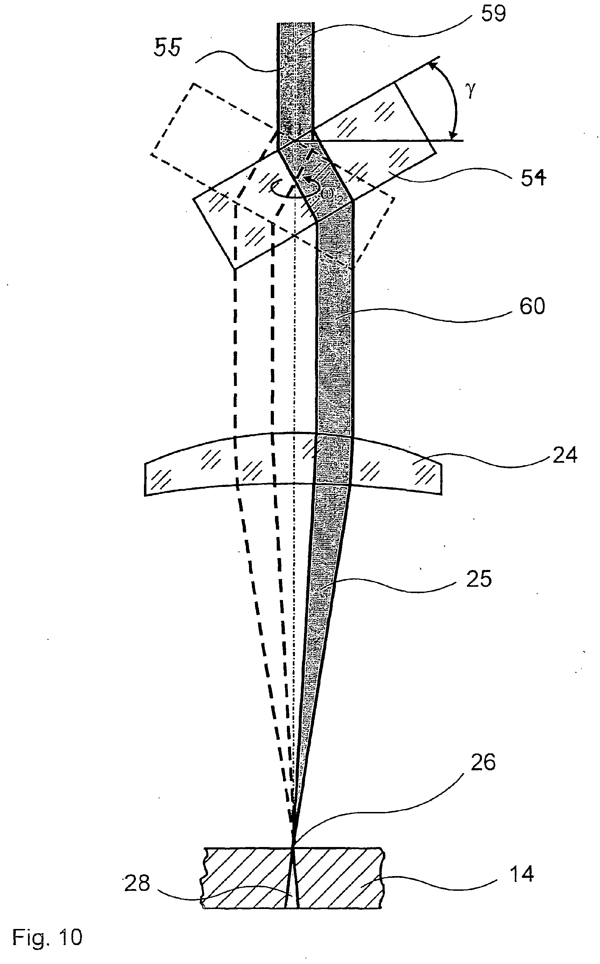

Dabei illustrieren zunächst die Figuren 9 und 10 das Prinzip der Erzeugung einer solchen Rotation mittels einer planparallelen Platte 54 einer Dicke d aus transparentem Material, welches durch eine Brechzahl n charakterisiert ist. In Figur 9 ist zunächst das an sich bekannte Prinzip eines definierten Strahlversatzes $\Delta$ durch die planparallele Platte 54 dargestellt. Der Strahlversatz $\Delta$ zwischen einem unter einem Einfallswinkel $\gamma$ auf die Platte 54 einfallenden Strahl 55 und einem versetzten Strahl 57 berechnet sich dabei aus den Plattenparametern d (Plattendicke) und n (Brechzahl des optischen Mediums) und dem Einstrahlwinkel $\gamma$ in Bezug auf das Einfallslot 56 gemäß folgender Beziehung:

$$\Delta \quad \approx \quad \frac{n-1}{n \cdot d \cdot \tan \gamma}$$

Die Figur 10 zeigt die Anwendung dieses Prinzips in einer Vorrichtung, bei der die geneigte planparallele Platte 54 mit der Kreisfrequenz $\omega_2$ um eine Achse 59 des einfallenden Strahls rotiert, wodurch erreicht wird, dass ein versetzter Strahl 60 um die Achse 59 rotiert, welcher in dem fokussierten Laserstrahl 25 über die Fokussierlinse 24 in den Fokusspot 26 fokussiert wird. Da der Versatz $\Delta$ des einfallenden Strahls 55 ist auch bei relativ dicken Platten 54 vergleichsweise klein ist, lassen sich nur relativ kleine Öffnungswinkel der konischen Bohrung 28 in dem Werkstück 14 erreichen. Vorteile dieser Anordnung sind jedoch der vergleichsweise einfache Aufbau, die sehr präzise Einstellmöglichkeit des Versatzes $\Delta$ und damit letztlich der Form des erzeugten Loches 28 und schließlich auch die Tatsache, dass man durch den kleinen Strahlversatz $\Delta$ im mm-Bereich praktisch immer im Bereich relativ guter Abbildung der Fokussierlinse 24 bleibt, so dass die Linsenfehler nur unwesentlich ins Gewicht fallen.

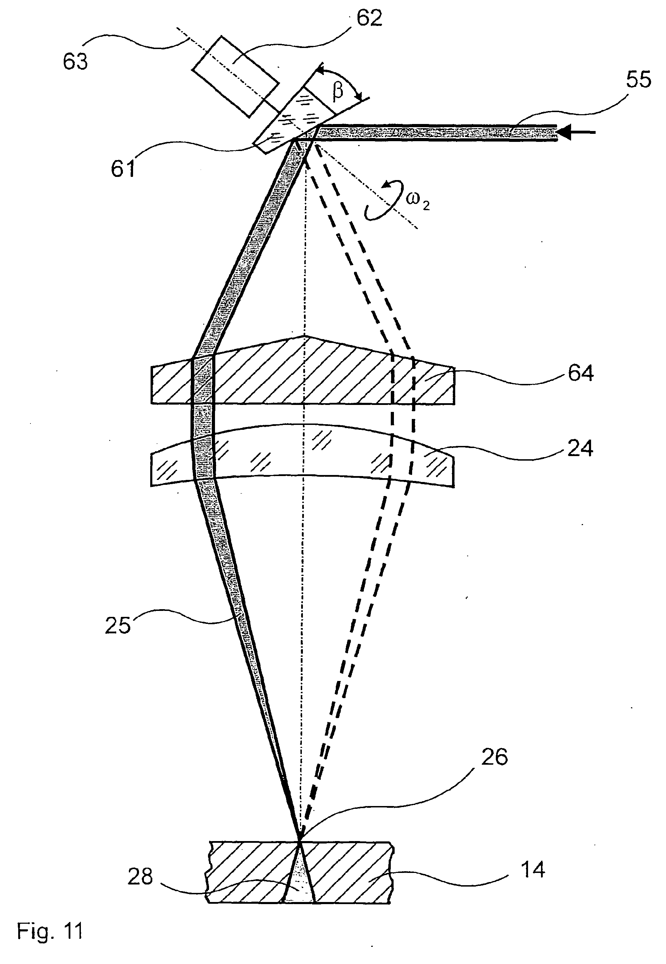

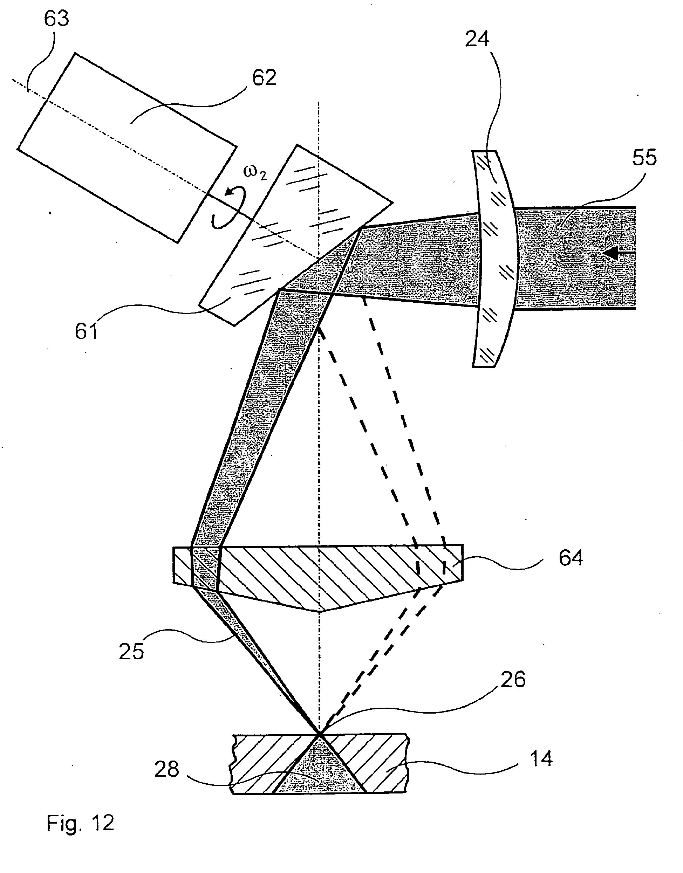

Die Figuren 11 und 12 zeigen zwei Ausführungsformen zur Rotation des Strahlbündels um die Systemachse mittels einer Kombination aus einem Taumelspiegel 61, welcher durch einen Keilwinkel $\beta$ charakterisiert ist, und einem Axicon 64 in Verbindung mit der Fokussierlinse 24. Diese Anordnungen haben den Vorzug, dass sie sehr kompakt gehalten werden können und die Bündelrotation durch ein sehr simples und damit sehr funktionssicheres Reflexionsprinzip am Taumelspiegel 61, welcher durch einen Motor 62 zu einer Rotation um eine Rotationsachse 63 angetrieben wird, erfolgt. Das erfindungsgemäße Neue an diesen Anordnungen ist die Tatsache, dass der große Öffnungswinkel des Strahlenkegels, der aus dem einfallenden Strahl 55 mittels des Taumelspiegels 61 erzeugt wird, durch das Axicon 64 mit entsprechendem brechenden Winkel kompensiert wird, so dass die wichtige Bedingung, dass alle Strahlen des fokussierenden Strahl 25 durch die im Anschluss an das Axicon 64 angeordnete Fokussierlinse 24 im gemeinsamen Fokusspot 26 gesammelt werden müssen, sehr gut erfüllbar ist.

Ein besonderer Vorzug der in Figur 12 gezeigten Anordnung, die ebenfalls sehr kompakt aufgebaut werden kann, ist die Tatsache, dass der einfallende Strahl 55 zunächst mit sehr geringen Abbildungsfehlern durch die Fokussierlinse 24 fokussiert und erst anschließend auf dem Weg zum Fokusspot durch den Taumelspiegel 61 in Rotation versetzt und der Öffnungswinkel des rotierenden Bündels durch das Axicon 64 kompensiert wird. Auf diese Art und Weise lassen sich sehr große Öffnungswinkel und damit also auch sehr große Winkel des Bohrlochs 28 erreichen, ohne dass Bündelverzerrungen durch Abbildungsfehler der Fokussieroptik auftreten.

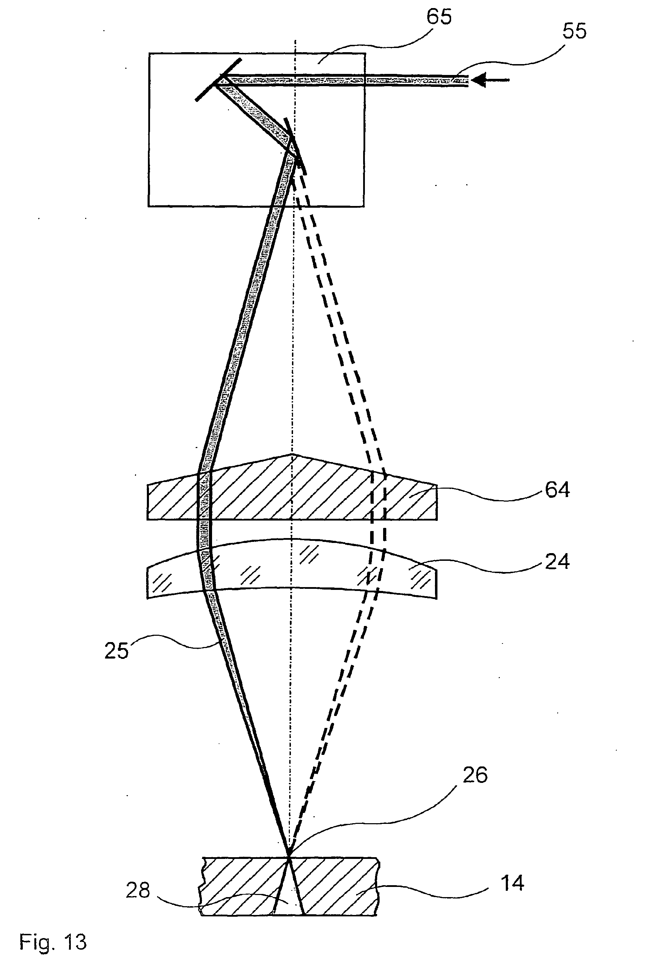

Universell im Hinblick auf die erzeugte Form des Bohrloches 28 ist die Anordnung nach Figur 13. Hier wird anstelle des Taumelspiegels 61 ein x-y-Scanner 65 eingesetzt, mit dem im Prinzip neben der einfachen Rotation des einfallenden Strahls 55 auch völlig andere geometrische Wege des abgelenkten Strahls erzeugt werden können, also z. B. Vierecke, Ellipsen usw. Auch hier wird letztendlich die durch den x-y-Scanner 65 erzeugte große Auslenkung des Strahls durch das Axicon 64 kompensiert, wobei allerdings bei Formen, die vom Kreis abweichen, gewisse Kompromisse eingegangen werden müssen. In dieser Ausführungsform ist die Fokussierlinse 24 wiederum dem Axicon 64 nachgeordnet.

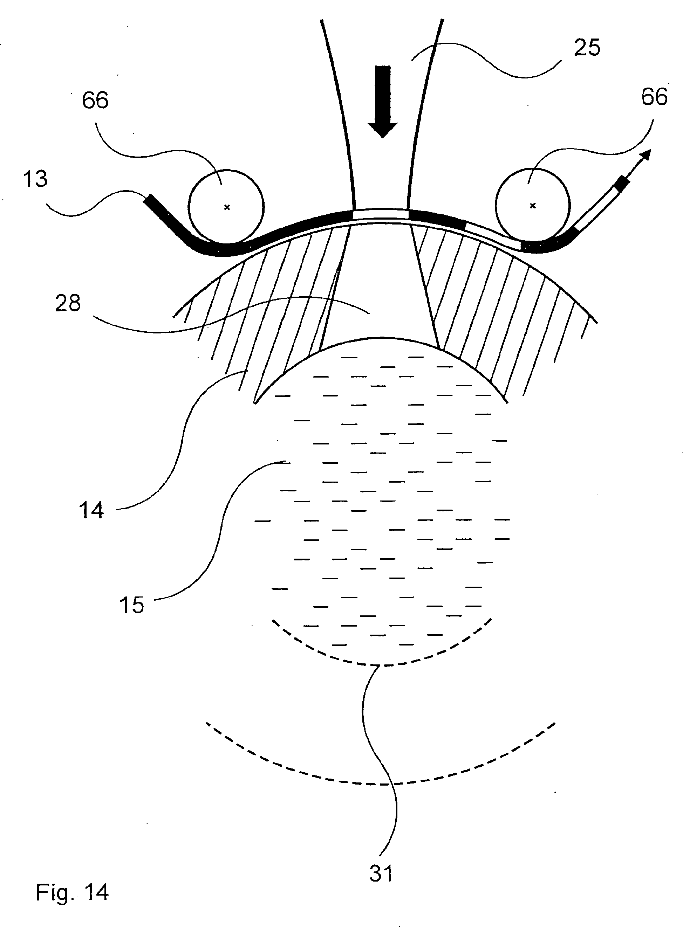

In Figur 14 wird eine mögliche prinzipielle Anordnung zur Führung der Schutzfolie 13 über die Oberfläche des Werkstückes 14 dargestellt. Kernstück sind hierbei zwei kleine Andruckrollen 66, die einerseits dafür sorgen, dass die Schutzfolie 13 fest an der Oberfläche des Werkstückes 14 anliegt, die andererseits aber auch die Möglichkeit lassen, diese Folie 13 so schnell am Bearbeitungsort des zu bohrenden Bohrlochs 28 vorbeizubewegen, dass jeder einzelne Impuls oder bestimmte ausgewählte Impulsfolgen des fokussierten Strahls 25 jeweils eine neue von Strahlung noch nicht beaufschlagte Fläche der Schutzfolie 13 vorfinden und auf diese Weise der Bohrprozess und der Schutz der Oberfläche des Werkstücks 14 gegen Beaufschlagung mit verdampftem Material oder Schmelze optimiert werden kann. In dieser Darstellung ist auch schon angedeutet, dass an der Rückseite des Bohrlochs 28 eine absorbierende Flüssigkeit 15 strömt, die dafür sorgt, dass eine dem Bohrloch gegenüberliegende Wand 31 nicht mit Reststrahlung 29, die eventuell durch das Bohrloch 28 hindurchtritt, beaufschlagt wird.

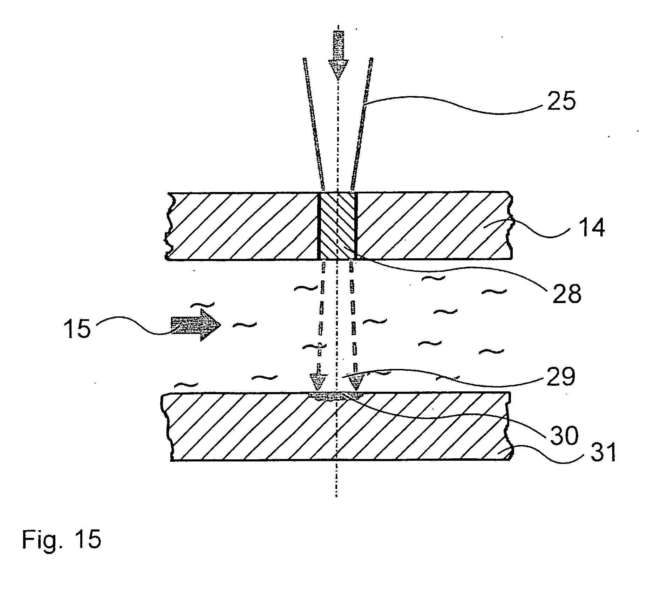

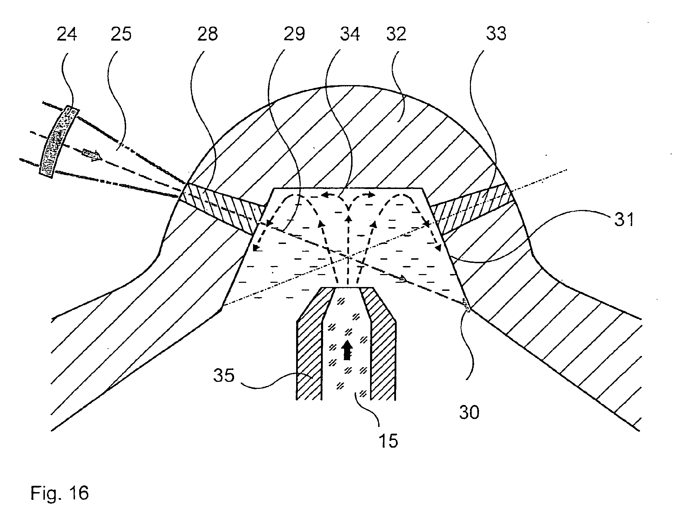

Diesen ganz wichtigen Faktor beim Präzisionsbohren kleiner Werkstücke wie z. B. Kraftstoffeinspritzdüsen, illustrieren detailliert die Figuren 15 und 16.

In Figur 15 ist noch einmal das Grundprinzip dargestellt, d. h. nach Bohren des definierten Bohrloches 28 durch die fokussierte Laserstrahlung 25 in das Werkstück 14 würde ohne besondere Vorkehrungen eine gewisse Reststrahlung 29 auf die gegenüberliegende Wand 31 fallen und dort einen Bereich 30 beaufschlagen. In der Endphase der Lochentstehung, wenn also die Austrittsöffnung weitgehend ausgebildet ist, kann diese Reststrahlung 29 so stark sein, dass dieser mit Strahlung beaufschlagte Bereich 30 stark erhitzt, aufgeschmolzen oder gar verdampft wird, so dass eine Beschädigung der Wand 31 droht.

Um dies zu verhindern, wird zwischen das Werkstück 14 und die dem Bohrloch 28 gegenüberliegende Wand 31 die die Laserreststrahlung 29 absorbierende Flüssigkeit 15 geschickt, die so schnell strömt, dass sie durch die Reststrahlung 29, die durch das Bohrloch 28 hindurchtritt, nicht etwa so weit verdampft wird, dass eine Beschädigung der gegenüberliegenden Wand 31 erfolgen kann, sondern dass tatsächlich die gesamte Reststrahlung 29 in der Flüssigkeit 15 absorbiert wird. Da in dem erfindungsgemäßen Verfahren ein $CO_2$-Laser verwendet wird, kann als absorbierende Flüssigkeit 15 Wasser verwendet werden, welches gegebenenfalls mit Mitteln zur Verhinderung von Korrosion versetzt ist, da die Wellenlänge der vom $CO_2$-Laserausgesandeten Strahlung in Wasser absorbiert wird. Die Verwendung von Wasser als absorbierende Flüssigkeit ist besonders kostensparend.

Figur 16 zeigt diese Verhältnisse für den Fall des Bohrens von Kraftstoffeinspritzdüsen in einen Einspritzdüsenkörper 32 mittels des durch die Fokussierlinse 24 fokussierter Laserstrahl 25. Ein Bohrloch 33 wurde bereits fertig gestellt, an dem Bohrloch 28 wird vorliegend gearbeitet. In diesem Fall lässt sich eine vorteilhafte Ausführungsform in der Weise realisieren, dass mittels einer Düse 35 die absorbierende Flüssigkeit 15 so in den Einspritzdüsenkörper 32 gespritzt wird, dass die Flüssigkeit 15 auf die feste Wand am Oberteil der Einspritzdüse 32 prallt, die keine Bohrung enthält, und von dort in der dargestellten Weise so in ihrer Strömung 34 beeinflusst wird, dass sie links und rechts an den für die Bohrung 28 relevanten Wänden entlang strömt. Auf diese Weise kann auf einfache und effiziente Weise sichergestellt werden, dass die eventuell durch das Bohrloch 28 hindurchtretende Reststrahlung 29 auf gar keinen Fall die gegenüberliegende Wand an der Stelle 30 verletzt.

In den Figuren nicht dargestellt ist eine Vorrichtung zum Beblasen des Fokusspots 26 und der Umgebung der Oberseite des Bohrlochs 28, mit welcher ein Arbeits- und Schutzgas, beispielsweise Sauerstoff, Inertgase oder Mischungen aus beiden, beispielsweise eine Mischung aus Sauerstoff und Argon, in den Arbeitsbereich eingeblasen wird.

Bei Verwendung des dreistufigen Bohrprozesses wird auch der Gasdruck entsprechend dem zeitlichen Verlauf des Bohrprozesses variiert, um ein optimales Bohrergebnis zu erzielen. Im Startabschnitt des Bohrprozesses sind die einzelnen Impulsserien durch einen niedrigen Gasdruck im Bereich zwischen 0 und 1 bar charakterisiert. In den Bohrpausen werden Debris und unerwünschte Schmelzanteile bei hohem Gasdruck im Bereich von 1 bis 20 bar ausgeblasen. Zusätzlich sind der Bohr- und der Bohrlochformungsabschnitt durch ein stetiges Anwachsen des Drucks von dem Anfangsdruck, welcher im Startabschnitt des Bohrprozesses verwendet wird, bis auf Endwerte von bis zu maximal 20 bar charakterisiert.

Mit dem erfindungsgemäßen Verfahren und der erfindungsgemäßen Vorrichtung können Löcher gebohrt werden, welche einen Durchmesser von etwa 70 μm bei einer Tiefe von 1 mm aufweisen, scharfkantige Ein- und Austrittsränder sowie glatte Lochflanken besitzen und von einfach konischer Gestalt sind. Schmelzrückstände und thermisch bedingte Gefügeveränderungen im angrenzenden Material treten nicht auf. Die geometrischen Toleranzen der Bohrungen liegen bei wenigen Prozent.

Bezugszeichenliste

1 - $CO_2$-Laser
2 - $CO_2$-Laserstrahl
3 - Interferenz-Laserstrahlungsmodulator
4 - Einheit zur wellenlängenselektiven Unterdrückung der Strahlungsrückkopplung
5 - wellenlängenselektives optisches Element
6 - ATFR-Spiegel
7 - λ/4-Phasenschieber
8 - Umlenkspiegel
9 - Teleskop
10 - Einheit zur Rotation des Intensitätsprofils
11 - Einheit zur Rotation des Strahlenbündels um die Systemachse
12 - Fokussieroptik
13 - Schutzfolie
14 - Werkstück
15 - die Laserstrahlung absorbierende Flüssigkeit
16 - zeitlicher Leistungsverlauf der elektrisch gepulsten $CO_2$-Laserstrahlung
17 - Taktgeber für synchronisierte Steuerimpulse
18 - Steuergerät für $CO_2$-Laser
19 - Modulator-Ansteuerung
20 - Modulator-gepulster $CO_2$-Laserstrahl
21 - zeitlicher Leistungsverlauf der verkürzten Laserimpulse
22 - Rotationsmodul
23 - rotierender Laserstrahl
24 - Fokussierlinse
25 - fokussierter Laserstrahl
26 - Fokusspot (Bildpunkt der Linse 24)
27 - virtueller Ausgangspunkt der Laserstrahlung (Gegenstandspunkt der Fokussierlinse 24)
28 - Bohrloch definierter Form
29 - durch Bohrloch hindurchtretende Reststrahlung
30 - mit Strahlung beaufschlagter Bereich der gegenüberliegenden Wand
31 - dem Bohrloch gegenüberliegende Wand
32 - Einspritzdüsenkörper
33 - bereits gefertigtes Bohrloch

34 - strömende Absorberflüssigkeit
35 - Düse für Absorberflüssigkeit
36 - erste Funktionsebene des Rotationsmoduls
37 - zweite Funktionsebene des Rotationsmoduls
38 - Strahlachse des einfallenden Strahles
39 - einfallender Strahl
40 - erster Spiegel
41 - zweiter Spiegel
42 - dritter Spiegel
43 - Strahlelement
44 - Strahlelement
45 - Rotationsachse des Rotationsmoduls
46 - vierter Spiegel
47 - Auskoppelspiegel des Rotationsmoduls (fünfter Umlenkspiegel)
48 - ausgekoppelter Strahl
49 - Justiermöglichkeit für Auskoppelspiegel
50 - in Lage und Richtung ausgelenkter ausgekoppelter Strahl
51 - rotierender Bearbeitungskopf
52 - Umlenkspiegel
53 - Umlenkspiegel
54 - planparallele Platte aus transparentem Material
55 - einfallender Strahl
56 - Einfallslot
57 - versetzter Strahl
59 - Achse des einfallenden Strahls und der Plattenrotation
60 - versetzter Strahl
61 - Taumelspiegel
62 - Motor
63 - Rotationsachse
64 - Axicon
65 - x-y-Scanner
66 - Andruckrolle
67 - Strahlelement

d - Dicke der planparallelen Platte
n - Brechzahl der planparallelen Platte
P - Laserleistung
t - Zeit
z - Verschiebung der Achse des aus dem Rotationsmodul ausgekoppelten Strahls gegen die Systemachse
$\alpha$ - Richtungsänderung des aus dem Rotationsmodul ausgekoppelten Strahls
$\beta$ - Keilwinkel des Taumelspiegels
$\gamma$ - Einfallswinkel des Strahlenbündels auf planparallele Platte
$\Delta$ - Versatz des Strahlenbündels durch planparallele Platte
$\omega_1$ - Kreisfrequenz des Rotationsmoduls
$\omega_2$ - Kreisfrequenz der Rotation des Gesamtstrahls um die Systemachse

**Patentansprüche**

1. Verfahren zum Bohren von Löchern mit $CO_2$-Laserimpulsen unter Verwendung eines $CO_2$-Lasers (1) **gekennzeichnet durch** die Schritte:

   a) Umformung der linear polarisierten Strahlung des $CO_2$-Lasers in zirkular polarisierte Strahlung;
   b) Einsatz optischer Elemente zur Anpassung von Durchmesser und Divergenz des Strahlenbündels;
   c) Rotation des Intensitätsprofils des Strahlenbündels um seine Strahlachse;
   d) Rotation des gesamten Strahlenbündels um die Systemachse mit definiertem, aber frei einstellbarem Abstand sowie Winkel zwischen der Achse des Strahlenbündels und der Systemachse dergestalt, dass bei der anschließenden Fokussierung des so geformten Strahlenbündels mittels der Fokussieroptik (12) auf die gewünschte Bearbeitungsstelle gewährleistet ist, dass einerseits alle Strahlanteile in diesem Fokusspot (26) vereinigt werden und andererseits die Divergenz der Strahlung nach Passieren des Fokusspots (26) so angepasst ist, dass die gewünschte Lochform entsteht; wobei
   e) die Formung von Strahlungsimpulsen bzw. Strahlungsimpulsfolgen aus der Strahlung (2) des $CO_2$-Lasers (1) außerhalb des Laserresonators erfolgt;
   f) die Umgebung des Fokusspots (26) mit einem Arbeits- und Schutzgas beblasen wird;
   g) die Strahlungsrückkopplung zwischen Werkstück und $CO_2$-Laser **durch** eine wellenlängenselektive Entkopplungseinheit (4) unterdrückt wird und
   h) dem Bohrloch gegenüberliegende konstruktive Elemente des Bauteils vor unerwünschten Wirkungen der **durch** das Bohrloch hindurchtretenden Reststrahlung **durch** eine an der Unterseite des bearbeiteten Werkstücks strömende Flüssigkeit geschützt wird.

2. Verfahren nach Anspruch 1, **dadurch gekennzeichnet, dass** eine metallische Schutzfolie (13) auf der Oberfläche des Bauteils angeordnet ist.

3. Verfahren nach Anspruch 1 oder 2, **dadurch gekennzeichnet, dass** zum Beblasen der Umgebung des Fokusspots (26) ein Gemisch aus Sauerstoff und einem Inertgas, vorzugsweise Argon, verwendet wird.

4. Verfahren nach einem der vorhergehenden Ansprüche, **dadurch gekennzeichnet, dass** eine die Laserstrahlung ausreichend stark absorbierende Flüssigkeit (15) als Flüssigkeit verwendet wird.

5. Verfahren nach einem der vorhergehenden Ansprüche,
**dadurch gekennzeichnet, dass** als optische Elemente zur Anpassung von Durchmesser und Divergenz des Strahlenbündels eine Teleskopanordnung (9) verwendet wird.

6. Verfahren nach einem der vorhergehenden Ansprüche,
**dadurch gekennzeichnet, dass** die Formung der Strahlungsimpulse außerhalb des Laserresonators derart erfolgt, dass entweder aus der kontinuierlichen Laserstrahlung oder aus den Strahlungsimpulsen (16) des elektrisch gepulsten $CO_2$-Lasers (1) Impulse (21) "herausgeschnitten" werden, die durch Symmetrie im Zeitverlauf der Leistung und Impulsdauern $\tau_{imp}$ im Größenordnungsbereich $1\ \mu s \leq \tau_{imp} \leq 100\ \mu s$ charakterisiert sind.

7. Verfahren nach Anspruch 6,
**dadurch gekennzeichnet, dass** die Erzeugung der Strahlungsimpulse mittels eines außerhalb des Laserresonators angeordneten akustooptischen oder Interferenz-Laserstrahlungsmodulators (3) erfolgt.

8. Verfahren nach Anspruch 7,
**dadurch gekennzeichnet, dass** die Erzeugung der elektrisch gepulsten Strahlung des $CO_2$-Lasers (1) und die Formung dieser Impulse durch den Interferenz-Laserstrahlungsmodulator (3) mittels synchronisierter Steuerimpulse aus einem gemeinsamen Taktgeber (17) so erfolgt, dass das Leistungsmaximum der "herausgeschnittenen" verkürzten Impulse (21) genau mit dem Leistungsmaximum der Ausgangsimpulse (16) des $CO_2$-Lasers (1) zusammenfällt.

9. Verfahren nach einem der vorhergehenden Ansprüche,
**dadurch gekennzeichnet , dass** mittels einer elektrischen Ansteuerung (18) des $CO_2$-Lasers (1) oder mittels eines zweiten Strahlungsmodulators die Spitzenleistung der jeweiligen Einzelimpulse (21) des die Bohrung realisierenden Impulszuges im Intervall zwischen 10% und 100% der maximalen Laserleistung während des Bohrprozesses geregelt wird.

10. Verfahren nach Anspruch 9,
**dadurch gekennzeichnet, dass** sich der Bohrprozess in drei Abschnitte gliedert, nämlich einen Startabschnitt, einen Bohrabschnitt und einen Bohrlochformungsabschnitt, wobei der Startabschnitt eine oder mehrere Serien von Impulsen, vorzugsweise 10 bis 100 Impulsen, aufweist, wobei der erste Impuls eine Spitzenleistung besitzt, die der Abtragsschwelle des zu bearbeitenden Werkstoffs entspricht, und die folgenden Impulse durch eine sukzessive Erhöhung der Spitzenleistung charakterisiert sind, wobei der Bohrabschnitt eine oder mehrere Serien von Impulsen, vorzugsweise 10 bis 100 Impulsen, aufweist, deren Spitzenleistung so weit über denen des Startabschnitts liegen, dass das Bohrloch in die Tiefe und bis zur Durchbohrung vorangetrieben wird, und der Lochformungsabschnitt Impulsserien aufweist, deren Spitzenleistungen so gewählt sind, dass die Lochoberkante nicht wieder aufgeschmolzen wird, und wobei die kombinierte Bewegung aus Rotation des Strahlenbündels um die Systemachse und des Strahlprofils um die Strahlachse verwendet wird, um die vorgegebene Lochform, beispielsweise einen nach unten erweiterten Konus, zu erzielen.

11. Verfahren nach Anspruch 10,
**dadurch gekennzeichnet, dass** der Gasdruck des Arbeits- und Schutzgases auf den zeitlichen Verlauf des Bohrprozesses abgestimmt ist, vorzugsweise derart, dass im Startabschnitt ein Gasdruck zwischen 0 und 1 bar, in den Bohrpausen ein Gasdruck im Bereich von 1 bis 20 bar und sowohl im Bohrabschnitt als auch im Lochformungsabschnitt ein sich ändernder Gasdruck verwendet wird, welcher von dem Anfangsdruck, welcher im Startabschnitt verwendet wird, auf einen Gasdruck von bis zu maximal 20 bar ansteigt.

12. Verfahren nach einem der vorhergehenden Ansprüche,
**dadurch gekennzeichnet, dass** die Rotation des Intensitätsprofils des Strahlenbündels und des Strahlenbündels mittels einer drehbar gelagerten 5-Spiegel-Anordnung, dem Rotationsmodul (22), realisiert werden, die als eine Art "optisches Getriebe" wirkt und die Rotation des Intensitätsprofils um die Strahlachse mit der doppelten Rotationsgeschwindigkeit $2\omega_1$ des Rotationsmoduls (22) und die wahlweise einstellbare Rotation des Strahlenbündels um die Systemachse mit der einfachen Rotationsgeschwindigkeit $\omega_1$ des Rotationsmoduls (22) bewirkt.

13. Verfahren nach einem der vorhergehenden Ansprüche,
**dadurch gekennzeichnet, dass** zur Realisierung von Winkel $\geq 10°$ zwischen der Strahlachse und der Systemachse am Orte des Fokusspots (26) eine Kombination aus einer Einheit zur Rotation des Intensitätsprofils (10), vorzugsweise dem Rotationsmodul (22), und einer Einheit zur Rotation des Strahlenbündels um die Systemachse (11) genutzt wird.

14. Verfahren nach einem der Ansprüche 13,
**dadurch gekennzeichnet, dass** die Rotationsgeschwindigkeit $(\omega_1)$ der Einheit (10) und die Rotati-

onsgeschwindigkeit ($\omega_2$) der Einheit (11) inkommensurabel sind.

15. Verfahren nach einem der Ansprüche 2 bis 14, **dadurch gekennzeichnet, dass** die Schutzfolie (13) während des Bohrprozesses von Impuls zu Impuls oder von Impulszug zu Impulszug so weiterbewegt wird, dass die Strahlung jeweils auf ein noch nicht mit Strahlung beaufschlagtes Flächenelement dieser Folie trifft.

16. Verfahren nach einem der vorhergehenden Ansprüche, **dadurch gekennzeichnet, dass** die wellenlängenselektive Entkopplungseinheit einen ATFR-Spiegel (6) aufweist und an weitgehend beliebiger Stelle im Strahlengang zwischen dem Resonatorendspiegel des Lasers und dem Rotationsmodul (22) wenigstens ein frequenzselektives Element (5) angeordnet wird.

17. Verfahren nach einem der Ansprüche 4 bis 16, **dadurch gekennzeichnet, dass** als absorbierende Flüssigkeit (15) Wasser verwendet wird.

18. Verfahren nach Anspruch 17, **dadurch gekennzeichnet, dass** das Wasser mit Mitteln zur Verhinderung von Korrosion versetzt ist.

19. Vorrichtung zum Bohren von Löchern, insbesondere zur Durchführung des Verfahrens nach einem der Ansprüche 1 bis 18 mit

- einem leistungsstarken $CO_2$ -Laser (1) hoher Strahlqualitätskennzahl K > 0,8,
- Mitteln zur Umformung der linear polarisierten Strahlung des Lasers in zirkular polarisierte Strahlung,
- Mitteln zur Anpassung der Divergenz des Strahlenbündels an den dynamischen Prozess seiner Fokussierung auf das Werkstück (14),
- einer Einheit (10) zur Erzeugung einer Rotation des Intensitätsprofils um die Strahlachse und einer Einheit (11) zur Realisierung einer Rotation des so geformten Strahlenbündels um die Systemachse mit definiertem, aber frei einstellbarem Abstand sowie Winkel zwischen der Achse des Strahlenbündels und der Systemachse,
- einem außerhalb des Laserresonators angeordneten Interferenz-Laserstrahlungsmodulator (3) zur Formung definierter Strahlungsimpulse (21) aus der ursprünglichen Laserstrahlung (2),
- einer wellenlängenselektiven Einheit (4) zur Unterdrückung der Strahlungsrückkopplung zwischen Werkstück (14) und $CO_2$ -Laser (1) sowie
- einer Düse (35) zum Einspritzen einer an der Werkstückunterseite entlangströmenden Flüssigkeit (15), welche die durch das Bohrloch hindurchtretende $CO_2$ -Laserstrahlung absorbiert.

20. Vorrichtung nach Anspruch 19, **dadurch gekennzeichnet, dass** zur Umformung der linear polarisierten Strahlung des Lasers (1) in zirkular polarisierte Strahlung ein $\lambda/4$-Phasenschieber (7), vorzugsweise eine $\lambda/4$-Platte aus für die $CO_2$ -Laserstrahlung (2) transparentem Material oder ein $\lambda/4$-Phasenschieberspiegel, dient.

21. Vorrichtung nach einem der Ansprüche 19 bis 20, **dadurch gekennzeichnet, dass** zur Anpassung der Divergenz des Strahlenbündels an den dynamischen Prozess seiner Fokussierung auf das Werkstück (14) ein Teleskop (9), vorzugsweise ein Teleskop vom Galilei'schen Typ, eingesetzt wird.

22. Vorrichtung nach einem der Ansprüche 19 bis 21, **dadurch gekennzeichnet, dass** zur kombinierten Rotation des Intensitätsprofil der Laserstrahlung um die Strahlachse sowie der Rotation des gesamten Strahlenbündels um die Systemachse ein Rotationsmodul (22) eingesetzt wird.

23. Vorrichtung nach Anspruch 22, **dadurch gekennzeichnet, dass** das Rotationsmodul (22) aus fünf Spiegeln (40, 41, 42, 46, 47) besteht, wobei die ersten drei Spiegel (40, 41, 42) in einer ersten Funktionsebene (36) senkrecht zur Strahlachse (38) des einfallenden Strahl (39) so angeordnet sind, dass der erste Spiegel (40) das Bündel um 90° auf den zweiten Spiegel (41) umlenkt, dieser das Bündel wieder um 90° auf den dritten Spiegel (42) so umlenkt, dass die beiden Strahlelemente (43) und (44) in der ersten Funktionsebene (36) liegen und der dritte Spiegel das Bündel wieder um 90° senkrecht aus der ersten Funktionsebene (36) heraus in Richtung der zweiten Funktionsebene (37), die ebenfalls senkrecht zur ursprünglichen Strahlachse (38) und damit auch zur Rotationsachse (45) des Rotationsmoduls (22) steht, auf den in dieser Ebene befindlichen vierten Spiegel (46) reflektiert, der den Strahl wieder um 90° in dieser zweiten Funktionsebene (37) in Richtung der Rotationsachse (45) auf den "Auskoppelspiegel" (47) des Rotationsmoduls (22) spiegelt, wobei letzterer so angeordnet ist, dass er das Bündel um 90° aus dem Rotationsmodul (22) in den weiteren Strahlengang lenkt und dieser Spiegel Mittel zur Justierung (49) zur Lage und Richtung des ausgekoppelten Strahls (48) besitzt.

24. Vorrichtung nach Anspruch 23, **dadurch gekennzeichnet, dass** der fünfte Spiegel (47) so angeordnet ist, dass der ausgekoppelte Strahl (48) genau in der Verlängerung der Strahlachse (38) des einfallenden Strahls (39) verläuft und das Rotationsmodul (22) so als eine Art "optisches Getriebe" fungiert, dass bei einer Umdrehung des Rotationsmoduls (22) um seine Achse (45) das Intensitätsprofil des ausgekoppelten Strahls (48) zweimal um seine Strahlachse rotiert.

25. Vorrichtung nach Anspruch 24,
**dadurch gekennzeichnet, dass** der fünfte Spiegel in Richtung des Strahlelements (67), also senkrecht zur Strahlachse (38) des einfallenden Strahls bzw. zur Rotationsachse (45) des Rotationsmoduls (22), verschiebbar ist, so dass beliebige Abstände (z) zwischen der Strahlachse (38) des einfallenden Strahls und der Achse des ausgekoppelten Strahls (48) einstellbar sind.

26. Vorrichtung nach einem der Ansprüche 23 bis 25,
**dadurch gekennzeichnet , dass** durch die Justiermöglichkeiten (49) des Auskoppelspiegels (47) Winkel ($\alpha$) im Bereich zwischen 0° und 20° einstellbar sind.

27. Vorrichtung nach einem der Ansprüche 19 bis 21,
**dadurch gekennzeichnet, dass** zwei getrennte Einheiten (10, 11) zur Rotation des Intensitätsprofils (10) und des Strahlenbündels um die Systemachse (11) eingesetzt werden, die unterschiedliche, vorzugsweise inkommensurable, Kreisfrequenzen ($\omega_1$ und $\omega_2$) ihrer Rotation aufweisen.

28. Vorrichtung nach einem Ansprüche 19 bis 21 oder 27,
**dadurch gekennzeichnet, dass** die Einheit (11) zur Rotation des Strahlenbündels um die Systemachse durch einen rotierenden Bearbeitungskopf (51), der zwei Umlenkspiegel (52) und (53) sowie die Fokussierlinse (24) enthält und mit der Kreisfrequenz ($\omega_2$) rotiert, gebildet wird.

29. Vorrichtung nach einem Ansprüche 19 bis 21 oder 27,
**dadurch gekennzeichnet, dass** die Einheit (11) zur Rotation des Strahlenbündels um die Systemachse durch eine um den Winkel ($\gamma$) gegen die Systemachse geneigte und mit der Kreisfrequenz ($\omega_2$) rotierende planparallele Platte der Dicke (d) gebildet wird.

30. Vorrichtung nach einem der Ansprüche 19 bis 21 oder 27,
**dadurch gekennzeichnet, dass** die Einheit (11) durch eine Kombination aus einem Taumelspiegel (61), der durch einen Keilwinkel ($\beta$) charakterisiert und durch einen Motor (62) mit einer Kreisfrequenz ($\omega_2$) so angetrieben wird, dass aus dem einfallenden Strahl (55) mit raumstabiler Strahlachse ein kreisförmig umlaufendes Bündel entsteht, und einem Axicon (64) unmittelbar vor der Fokussierlinse (24) gebildet wird.

31. Vorrichtung nach Anspruch 30,
**dadurch gekennzeichnet, dass** die Fokussierlinse (24) dem System Taumelspiegel (61) - Axicon (64) vorgelagert ist.

32. Vorrichtung nach Anspruch 30 oder 31,
**dadurch gekennzeichnet, dass** anstelle des Taumelspiegels (61) ein schneller x-y-Scanner (65) eingesetzt wird.

33. Vorrichtung nach einem der Ansprüche 19 bis 32,
**dadurch gekennzeichnet, dass** die Vorrichtung Andruckrollen (66) aufweist, welche eine Schutzfolie (13) straff aber beweglich auf die Oberseite des Werkstücks (14) andrückt, und welche durch eine Vorrichtung während des Bohrprozesses rasch so weiterbewegt wird, dass jeder einzelne Bearbeitungsimpuls ein vorher noch nicht mit Strahlung beaufschlagtes Flächenelement der Schutzfolie (13) vorfindet.

34. Vorrichtung nach einem der Ansprüche 19 bis 33,
**dadurch gekennzeichnet, dass** die Schutzfolie (13) metallisch ist.

35. Vorrichtung nach einem der Ansprüche 19 bis 34,
**dadurch gekennzeichnet, dass** die Schutzfolie (13) eine Dicke von etwa 10 bis 20 $\mu$m aufweist.

36. Vorrichtung nach einem der Ansprüche 19 bis 35,
**dadurch gekennzeichnet, dass** die die Laserstrahlung absorbierende Flüssigkeit (15) mittels eines Injektionssystems, vorzugsweise einer Düse (35), so in den Raum zwischen der Unterseite des Bohrlochs definierter Form (28) und dem Bereich der gegenüberliegenden Wand (30) gebracht wird, dass die strömende Absorberflüssigkeit (34) die Laserstrahlung vollständig absorbiert.

37. Vorrichtung nach einem der Ansprüche 19 bis 36,
**dadurch gekennzeichnet, dass** die Einheit (4) zur wellenlängenselektiven Unterdrückung der Strahlungsrückkopplung zwischen Werkstück (14) und $CO_2$-Laser (1) realisiert wird durch drei Komponenten, nämlich den $\lambda$/4-Phasenschieber (7), einen ATFR-Spiegel (6) und wellenlängenselektive optische Elemente (5).

38. Vorrichtung nach Anspruch 37,
**dadurch gekennzeichnet, dass** die wellenlängenselektiven optischen Elemente (5) im Bereich des Strahlweges zwischen dem Endspiegel des $CO_2$-Lasers (1) und der Einheit (10) zur Rotation des Intensitätsprofils angeordnet sind.

39. Vorrichtung nach Anspruch 37 oder 38,

**dadurch gekennzeichnet, dass** als wellenlängenselektives Element (5) ein Prisma oder ein Gitter dient.

**40.** Vorrichtung nach Anspruch 37 oder 38, **dadurch gekennzeichnet, dass** ein oder mehrere frequenzselektive Spiegel zur Frequenzselektion dienen.

**41.** Vorrichtung nach einem der Ansprüche 37 bis 40, **dadurch gekennzeichnet, dass** wenigstens eine Komponente der Einheit (4) zur wellenlängenselektiven Unterdrückung außerhalb des Laserresonators angeordnet ist.

**Claims**

**1.** A method for drilling holes with $CO_2$ laser pulses by using a $CO_2$ laser (1), **characterised by** the following steps:

a) converting the linearly polarised radiation of the $CO_2$ laser into circularly polarised radiation;
b) use of optical elements for the adaptation of the diameter and divergence of the ray bundle;
c) rotation of the intensity profile of the ray bundle around its beam axis;
d) rotation of the entire ray bundle around the system axis with a defined, but freely adjustable spacing and angle between the axis of the ray bundle and the system axis in such a manner that during the subsequent focussing of the thus formed ray bundle by means of the focussing optics (12) onto the desired machining site it is guaranteed that firstly all beam portions are united in this focal spot (26) and secondly the divergence of the radiation after passing the focal spot (26) is adapted so that the desired hole shape is produced; wherein
e) the formation of radiation pulses or radiation pulse sequences from the radiation (2) of the $CO_2$ laser (1) takes place outside the laser resonator;
f) a working and protective gas is blown onto the area surrounding the focal spot (6);
g) the radiation feedback between the workpiece and the $CO_2$ laser is suppressed by a wavelength-selective decoupling unit (4) and
h) constructive elements of the component that are opposite the drill hole are protected from undesired effects of the residual radiation passing through the drill hole by a liquid flowing along the under side of the machined workpiece.

**2.** A method according to Claim 1, **characterised in that** a metal protective foil (13) is disposed on the surface of the component.

**3.** A method according to Claim 1 or 2, **characterised in that** a mixture of oxygen and an inert gas, preferably argon, is used to bombard the area surrounding the focal spot (26).

**4.** A method according to one of the preceding Claims, **characterised in that** a liquid (15) that sufficiently strongly absorbs the laser radiation is used as the liquid.

**5.** A method according to one of the preceding Claims, **characterised in that** a telescopic arrangement (9) is used as optical elements for adapting the diameter and divergence of the ray bundle.

**6.** A method according to one of the preceding Claims, **characterised in that** the formation of the radiation pulses takes place outside the laser resonator in such a manner that pulses (21) that are **characterised by** symmetry in the time sequence of the power and pulse durations $\tau_{imp}$ in the order of magnitude 1 $\mu s \leq \tau_{imp} \leq 100~\mu s$ are "cut" either out of the continuous laser radiation or from the radiation pulses (16) of the electrically pulsed $CO_2$ laser (1).

**7.** A method according to Claim 6, **characterised in that** the generation of the radiation pulses is performed by means of an acousto-optic or interference laser radiation modulator (3) disposed outside the laser resonator.

**8.** A method according to Claim 7, **characterised in that** the generation of the electrically pulsed radiation of the $CO_2$ laser (1) and the formation of these pulses by the interference laser radiation modulator (3) takes places by means of synchronised control pulses from a common clock pulse generator (17) so that the maximum power of the "cut out" truncated pulses (21) coincides precisely with the maximum power of the output pulses (16) of the $CO_2$ laser (1).

**9.** A method according to one of the preceding Claims, **characterised in that** by using electrical control (18) of the $CO_2$ laser (1) or by using a second radiation modulator, the peak power of the respective individual pulses (21) of the pulse train performing the drilling is controlled in the range between 10% and 100% of the maximum laser power during the drilling process.

**10.** A method according to Claim 9, **characterised in that** the drilling process is made up of three stages, namely a starting stage, a drilling stage and a drill hole formation stage, whereby the starting stage comprises one or more series of pulses, preferably 10 to 100 pulses, whereby the first pulse has a peak power corresponding to the removal threshold of the material to be machined, and the following pulses are **characterised by** a successive increase in the peak power, whereby the drilling stage comprises one or more series of pulses, preferably 10 to 100 pulses, the peak powers of which lie so far above those of the starting stage that the drill hole is driven in deep and it is drilled through, and the hole formation stage comprises pulse series, the peak powers of which are chosen so that the upper edge of the hole is not melted open again, and whereby the combined movement consisting of the rotation of the ray bundle around the system axis and of the beam profile around the beam axis is used to achieve the predetermined hole shape, for example a downwardly widening cone.

11. A method according to Claim 10, **characterised in that** the gas pressure of the working and protective gas is matched to the time sequence of the drilling process, preferably in such a manner that in the starting stage a gas pressure of between 0 and 1 bar is used, in the drilling pauses a gas pressure in the range from 1 to 20 bar is used, and both in the drilling stage and in the hole formation stage a varying gas pressure is used, which rises from the initial pressure used in the starting stage to a gas pressure of up to max. 20 bar.

12. A method according to one of the preceding Claims, **characterised in that** the rotation of the intensity profile of the ray bundle and of the ray bundle is performed by means of a rotatably mounted five-mirror configuration, the rotation module (22), which acts as a type of "optical gear" and brings about the rotation of the intensity profile around the beam axis at double the rotational speed $2\omega_1$ of the rotation module (22) and the selectively adjustable rotation of the ray bundle around the system axis at the simple rotational speed $\omega_1$ of the rotation module (22).

13. A method according to one of the preceding Claims, **characterised in that** to produce angles $\geq 10°$ between the beam axis and the system axis at the location of the focal spot (26) there is used a combination consisting of a unit for the rotation of the intensity profile (10), preferably the rotation module (22), and of a unit for the rotation of the ray bundle around the system axis (11).

14. A method according to one of Claims 13, **characterised in that** the rotational velocity ($\omega_1$) of the unit (10) and the rotational velocity ($\omega_2$) of the unit (11) are incommensurable.

15. A method according to one of Claims 2 to 14, **characterised in that** during the drilling process the protective foil (13) is moved on from pulse to pulse or from pulse train to pulse train so that the radiation in each case strikes a surface element of this foil not yet bombarded with radiation.

16. A method according to one of the preceding Claims, **characterised in that** the wavelength-selective decoupling unit comprises an absorbing thin film reflector (6) and at least one frequency-selective element (5) is disposed at a largely arbitrary location in the ray path between the resonator mirror of the laser and the rotation module (22).

17. A method according to one of Claims 4 to 16, **characterised in that** water is used as the absorbing liquid (15).

18. A method according to Claim 17, **characterised in that** the water is mixed with corrosion-preventing agents.

19. An apparatus for drilling holes, in particular for performing the method according to one of Claims 1 to 18, having

   - a high-performance $CO_2$ laser (1) having a high beam quality characteristic K > 0.8,
   - means for converting the linearly polarised radiation of the laser into circularly polarised radiation,
   - means for adapting the divergence of the ray bundle to the dynamic process of its focussing onto the workpiece (14),
   - a unit (10) for producing a rotation of the intensity profile around the beam axis and a unit (11) for producing a rotation of the thus formed ray bundle around the system axis with defined, but freely adjustable, spacing and angle between the axis of the ray bundle and the system axis,
   - an interference laser radiation modulator (3) disposed outside the laser resonator for forming defined radiation pulses (21) from the original laser radiation (2),
   - a wavelength-selective unit (4) for the suppression of the radiation feedback between the workpiece (14) and the $CO_2$ laser (1), and
   - a nozzle (35) for injecting a liquid (15) flowing along the underside of the workpiece, which liquid absorbs the $CO_2$ laser radiation passing through the drill hole.

20. An apparatus according to Claim 19, **characterised in that** a λ/4 phase shifter (7), preferably a λ/4 plate made of material transparent for $CO_2$ radiation, or a λ/4 phase shift mirror, is used for the conversion of the linearly polarised radiation of the laser (1) in circularly polarised radiation,.

21. An apparatus according to one of Claims 19 to 20, **characterised in that** a telescope (9), preferably a telescope of the Galileo type, is used to adapt the divergence of the ray bundle to the dynamic process of its focussing onto the workpiece (14).

22. An apparatus according one of Claims 19 to 21, **characterised in that** a rotation module (22) is used for the combined rotation of the intensity profile of the laser radiation around the beam axis and also the rotation of the entire ray bundle around the system axis.

23. An apparatus according to Claim 22, **characterised in that** the rotation module (22) consists of five mirrors (40, 41, 42, 46, 47), with the first three mirrors (40, 41, 42) being disposed in a first functional plane (36) perpendicularly to the beam axis (38) of the incident beam (39) so that the first mirror (40) deflects the bundle by 90° onto the second mirror (41), this second mirror in turn deflects the bundle by 90° onto the third mirror (42) so that the two beam elements (43) and (44) lie in the first functional plane (36) and the third mirror reflects the bundle in turn by 90° perpendicularly out of the first functional plane (36) towards the second functional plane (37), which is also perpendicular to the original beam axis (38) and thus also to the axis of rotation (45) of the rotation module (22), reflects it onto the fourth mirror (46) located in this plane, which mirror reflects the beam in turn by 90° in this second functional plane (37) towards the axis of rotation (45) onto the "output mirror" of the rotational module (22), wherein the latter is disposed so that it directs the bundle by 90° out of the rotation module (22) into the further optical path and this mirror has means for adjustment (49) to the position and direction of the output beam (48).

24. An apparatus according to Claim 23, **characterised in that** the fifth mirror (47) is arranged so that the output beam (48) runs exactly in the extension of the beam axis (38) of the incident beam (39) and the rotation module (22) thus acts as a type of "optical gear" so that when the rotation module (22) is turned around its axis (45) the intensity profile of the output beam (48) rotates twice around its beam axis.

25. An apparatus according to Claim 24, **characterised in that** the fifth mirror is displaceable towards the beam element (67), i.e. perpendicularly to the beam axis (38) of the incident beam or to the axis of rotation (45) of the rotation module (22), so that any distances (z) between the beam axis (38) of the incident beam and the axis of the output beam (48) can be set.

26. An apparatus according to one of Claims 23 to 25, **characterised in that** angles ($\alpha$) in the range between 0° and 20° can be set by the adjustment facilities (49) of the output mirror (47).

27. An apparatus according to one of Claims 19 to 21, **characterised in that** two separate units (10, 11) having different, preferably incommensurable, angular frequencies ($\omega_1$ and $\omega_2$) of the rotation are used for the rotation of the intensity profile (10) and of the ray bundle around the system axis (11).

28. An apparatus according to one of Claims 19 to 21 or 27, **characterised in that** the unit (11) for the rotation of the ray bundle around the system axis is formed by a rotating machining head (51), which contains two passive reflectors (52) and (53) and the focussing lens (24) and rotates at the angular frequency ($\omega_2$).

29. An apparatus according to one of Claims 19 to 21 or 27, **characterised in that** the unit (11) for the rotation of the ray bundle around the system axis is formed by a plane-parallel plate of thickness (d) that is inclined by the angle ($\gamma$) towards the system axis and rotates at the angular frequency ($\omega_2$).

30. An apparatus according to one of Claims 19 to 21 or 27, **characterised in that** the unit (11) is formed by a combination consisting of a wobble mirror (61), which is **characterised by** a wedge angle ($\beta$) and is driven by a motor (62) having an angular frequency ($\omega_2$) so that a circularly rotating bundle is produced from the incident beam (55) with a spatially stable beam axis, and of an Axicon (64) directly in front of the focussing lens (24).

31. An apparatus according to Claim 30, **characterised in that** in front of the focussing lens (24) is located the wobble mirror (61)/Axicon system.

32. An apparatus according to Claim 30 or 31, **characterised in that** a fast x-y scanner (65) is used instead of the wobble mirror (61).

33. An apparatus according to one of Claims 19 to 32, **characterised in that** the apparatus comprises pressure rollers (66), which presses a protective foil (13) tautly but movably onto the upper side of the workpiece (14), and which is moved quickly on by a device during the drilling process so that a surface element of the protective foil (13) not previously bombarded with radiation is situated in front of each individual machining pulse.

34. An apparatus according to one of Claims 19 to 33, **characterised in that** the protective foil (13) is metallic.

**35.** An apparatus according to one of Claims 19 to 34, **characterised in that** the protective foil (13) has a thickness of roughly 10 to 20 $\mu$m.

**36.** An apparatus according to one of Claims 18 to 35, **characterised in that** the liquid (15) absorbing the laser radiation is moved by means of an injection system, preferably a nozzle (35), into the space between the underside of the drill hole and the region of the opposite wall (30) so that the flowing absorbing liquid (34) completely absorbs the laser radiation.

**37.** An apparatus according to one of Claims 19 to 36, **characterised in that** the unit (4) for the wavelength-selective suppression of the radiation feedback between the workpiece (14) and the $CO_2$ laser (1) is performed by three components, namely the $\lambda/4$ phase shifter (7) an absorbing thin film reflector (6) and wavelength-selective optical elements (5).

**38.** An apparatus according to Claim 37, **characterised in that** the wavelength-selective optical elements (5) are disposed in the region of the beam path between the end mirror of the $CO_2$ laser (1) and the unit (10) for the rotation of the intensity profile.

**39.** An apparatus according to Claim 37 or 38, **characterised in that** a prism or a grating serves as the wavelength-selective element (5).

**40.** An apparatus according to Claim 37 or 38, **characterised in that** one or more frequency-selective mirrors serve for frequency selection.

**41.** An apparatus according to one of Claims 37 to 40, **characterised in that** at least one component of the unit (4) for the wavelength-selective suppression is disposed outside the laser resonator.

**Revendications**

**1.** Procédé pour percer des trous à l'aide d'impulsions laser $CO_2$ en utilisant un laser $CO_2$, (1), **caractérisé par** les étapes suivantes :

    a) transformation du rayonnement à polarisation linéaire du laser $CO_2$ en un rayonnement à polarisation circulaire,
    b) utilisation d'éléments optiques pour adapter le diamètre et la divergence du faisceau de rayonnement,
    c) rotation du profil d'intensité du faisceau de rayonnement autour de son axe,
    d) rotation de l'ensemble du faisceau de rayonnement autour de l'axe du système à une distance définie mais réglée librement, ainsi qu'avec un angle compris entre l'axe du faisceau de rayonnement et l'axe du système de façon que pour la focalisation consécutive du faisceau laser ainsi mis en forme par l'optique de focalisation (12) sur le point que l'on souhaite travailler, d'une part toutes les composantes du rayonnement se réunissent en ce point de focalisation (26) et que d'autre part, après passage du point de focalisation (26), la divergence du rayonnement soit adaptée pour obtenir la forme souhaitée du trou,
    e) la mise en forme des impulsions ou des séquences d'impulsions du faisceau (2) du laser $CO_2$, (1) se fait à l'extérieur du résonateur du laser,
    f) l'environnement du point de focalisation (26) est balayé par un gaz de travail et un gaz protecteur,
    g) la réaction du faisceau entre la pièce et le laser $CO_2$ est neutralisée par une unité de découplage (4) sélective vis-à-vis des longueurs d'ondes, et
    h) les éléments constructifs de la pièce, à l'opposé du trou de perçage, sont protégés contre des effets non souhaités du rayonnement résiduel traversant le perçage par un fluide coulant le long de la face inférieure de la pièce travaillée.

**2.** Procédé selon la revendication 1, **caractérisé par** un film métallique protecteur (13) appliqué sur la surface de la pièce.

**3.** Procédé selon la revendication 1 ou 2, **caractérisé en ce que** pour balayer l'environnement du point de focalisation (26), on utilise un mélange d'oxygène et d'un gaz inerte, de préférence l'argon.

**4.** Procédé selon les revendications précédentes, **caractérisé en ce que** le liquide utilisé est un liquide (15) absorbant suffisamment fortement le rayonnement laser.

**5.** Procédé selon les revendications précédentes, **caractérisé en ce qu'** on utilise un dispositif télescopique (9), comme élément optique pour adapter le diamètre et la divergence du faisceau de rayonnement.

**6.** Procédé selon les revendications précédentes, **caractérisé en ce que** la mise en forme des impulsions du faisceau se fait à l'extérieur du résonateur laser, à partir du rayonnement laser continu ou à partir d'impulsions de rayonnement (16) du laser $CO_2$ (1) pulsé électriquement, on « découpe » des impulsions (21) qui se caractérisent par leur symétrie dans l'évolution chronologique de la puissance et par la durée $\tau_{imp}$ des impulsions, dans une plage d'ordre de grandeur de 1 $\mu$s $\leq \tau_{imp} \leq$ 100 $\mu$s.

7. Procédé selon la revendication 6,
**caractérisé en ce qu'**
on génère des impulsions de rayonnement à l'aide d'un modulateur optoacoustique ou à interférences de faisceau laser (3), installé à l'extérieur du résonateur laser.

8. Procédé selon la revendication 7,
**caractérisé en ce qu'**
on génère le rayonnement pulsé électrique du laser $CO_2$ (1) et on forme les impulsions par le modulateur à interférences (3) du faisceau laser par des impulsions de commande, synchronisées, fournies par un générateur d'horloge (17), commun, de façon que le maximum de la puissance des impulsions (21), raccourcies, « découpées » coïncide précisément avec le maximum de la puissance des impulsions de sortie (16) du laser $CO_2$ (1).

9. Procédé selon les revendications précédentes,
**caractérisé en ce qu'**
à l'aide d'une commande électrique (18) du laser $CO_2$ (1) ou à l'aide d'un second modulateur de rayonnement, on régule la puissance maximale de chaque impulsion respective (21) du train d'impulsions réalisant le perçage, dans un intervalle compris entre 10 % et 100 % de la puissance maximale du laser au cours du procédé de perçage.

10. Procédé selon la revendication 9,
**caractérisé en ce que**
le procédé de perçage se décompose en trois phases, à savoir une phases de départ, une phases de perçage et une phase de mise en forme du perçage, la phase de départ comporte une ou plusieurs séries d'impulsions de préférence entre 10 et 100 impulsions,
la première impulsion a une puissance maximale qui correspond au seuil d'enlèvement du matériau à usiner, et les impulsions suivantes sont **caractérisées par** une augmentation successive de la puissance maximale,
la phase de perçage se compose d'une ou plusieurs séries d'impulsions de préférence de 10 à 100 impulsions dont la puissance maximale se situe après la phase de départ de façon que le perçage avance en profondeur jusqu'à réaliser un perçage traversant, et
la phase de mise en forme du perçage comprend des séries d'impulsions dont les puissances maximales sont choisies pour que l'arête supérieure du perçage ne fonde pas de nouveau, et le mouvement combiné de la rotation du faisceau de rayonnement autour de l'axe du système et le profil du rayonnement autour de l'axe du faisceau sont utilisés pour obtenir la forme prédéfinie du perçage, par exemple un cône s'ouvrant vers le bas.

11. Procédé selon la revendication 10,
**caractérisé en ce qu'**
on accorde les pressions du gaz de travail et du gaz protecteur selon l'évolution chronologique du procédé de perçage, de préférence de façon que dans la phase de départ, on dispose d'une pression de gaz comprise entre 0 et 1 bar, et que dans les pauses de perçage, on dispose d'une pression de gaz dans une plage comprise entre 1 et 20 bars et qu'aussi bien dans la phase de perçage que dans la phase de mise en forme du perçage, on utilise une pression variable de gaz augmentant à partir de la pression initiale utilisée au cours de la phase de démarrage jusqu'à une pression de gaz allant au maximum à 20 bars.

12. Procédé selon les revendications précédentes,
**caractérisé en ce que**
la rotation du profil d'intensité du faisceau de rayonnement et celle du faisceau de rayonnement se réalisent à l'aide d'un dispositif composé de 5 miroirs montés à rotation, du module de rotation (22) fonctionnant comme une sorte de « transmission optique » et, la rotation du profil d'intensité autour de l'axe du faisceau se fait à la vitesse de rotation double ($2\omega_1$) du module de rotation (22) et la rotation réglable sélectivement du faisceau de rayonnement autour de l'axe du système se fait à la vitesse de rotation simple ($\omega_1$) du module de rotation (22).

13. Procédé selon les revendications précédentes,
**caractérisé en ce que**
pour réaliser un angle $\geq$ 10° entre l'axe du faisceau et l'axe du système à l'endroit du point de focalisation (26), on utilise une combinaison formée d'une unité servant à la rotation du profil d'intensité (10) de préférence au module de rotation (22) et d'une unité de rotation du faisceau de rayonnement autour de l'axe du système (11).

14. Procédé selon la revendication 13,
**caractérisé en ce que**
la vitesse de rotation ($\omega_1$) de l'unité (10) et la vitesse de rotation ($\omega_2$) de l'unité (11) sont incommensurables.

15. Procédé selon les revendications 2 à 14,
**caractérisé en ce qu'**
au cours du procédé de perçage, le film protecteur (13) est déplacé d'une impulsion à l'autre ou d'un train d'impulsions à un autre train d'impulsions de façon que le rayonnement arrive chaque fois sur un élément de la surface de cette feuille non encore touché par le faisceau.

**16.** Procédé selon les revendications précédentes, **caractérisé en ce que**
l'unité de découplage sélective en longueur d'onde comporte un miroir ATFR (6) et en un point pratiquement quelconque du chemin du faisceau, entre le miroir, l'extrémité du résonateur du laser et le module de rotation (22), on a au moins un élément (5) sélectif en fréquence.

**17.** Procédé selon les revendications 4 à 16, **caractérisé en ce qu'**
on utilise de l'eau comme fluide absorbant (15).

**18.** Procédé selon la revendication 17, **caractérisé en ce qu'**
on ajoute à l'eau des agents anticorrosion.

**19.** Dispositif pour percer des trous notamment pour la mise en oeuvre du procédé selon les revendications 1 à 18, comprenant :

- un laser $CO_2$ de puissance (1), ayant un nombre caractéristique de qualité de faisceau K > 0,8,
- des moyens pour transformer le faisceau à polarisation linéaire du laser en un faisceau à polarisation circulaire,
- des moyens pour adapter la divergence du faisceau de rayon au procédé dynamique de sa focalisation sur la pièce (14),
- une unité (10) pour générer une rotation du profil d'intensité autour de l'axe du faisceau et une unité (11) pour réaliser une rotation du faisceau de rayonnement ainsi formé autour de l'axe du système avec une distance définie mais réglable librement ainsi qu'un angle entre l'axe du faisceau de rayonnement et l'axe du système,
- un modulateur à interférences de rayonnement laser (3) installé à l'extérieur du résonateur du laser pour former des impulsions de rayonnement (21) définies à partir du faisceau laser (2), d'origine,
- une unité (4) sélective en longueur d'onde pour supprimer la réaction du faisceau entre la pièce (14) et le laser $CO_2$ (1), et
- une buse (35) pour injecter un liquide (15) coulant le long de la face inférieure de la pièce et absorbant le faisceau du laser $CO_2$ sortant du perçage.

**20.** Dispositif selon la revendication 19, **caractérisé en ce que**
pour transformer le faisceau à polarisation linéaire du laser (1) en faisceau à polarisation circulaire, on utilise un déphaseur À/4 (7) de préférence une plaque quart d'onde $\lambda/4$ en un matériau transparent au faisceau laser $CO_2$ (2) ou un miroir de déphasage

quart d'onde $\lambda/4$.

**21.** Dispositif selon les revendications 19 à 20, **caractérisé en ce que**
pour adapter la divergence du faisceau de rayonnement au procédé dynamique de sa focalisation sur la pièce (14), on utilise un télescope (9), de préférence un télescope de type Galilée.

**22.** Dispositif selon les revendications 19 à 21, **caractérisé en ce que**
pour la rotation combinée du profil d'intensité du faisceau laser autour de l'axe du faisceau et de la rotation du faisceau laser global autour de l'axe du système, on utilise un module de rotation (22).

**23.** Dispositif selon la revendication 22, **caractérisé en ce que**
le module de rotation (22) se compose de 5 miroirs (40, 41, 42, 43, 46, 47),
les trois premiers miroirs (40, 41, 42) sont installés dans un premier plan fonctionnel (36) perpendiculaire à l'axe (38) du faisceau incident (39),
le premier miroir (40) dévie le faisceau de 90° vers le second miroir (41) qui dévie de nouveau le faisceau de 90° vers le troisième miroir (42),
les deux éléments de faisceau (43 et 44), sont situés dans le premier plan fonctionnel (36) et le troisième miroir dévie de nouveau le faisceau de 90° perpendiculairement par rapport au premier plan fonctionnel (36) en direction du second plan fonctionnel (37) également perpendiculaire à l'axe (38) du faisceau d'origine et ainsi également à l'axe de rotation (45) du module de rotation (22) vers le quatrième miroir (46) contenu dans ce plan, et ce miroir réfléchit le faisceau de 90° dans ce second plan fonctionnel (37) en direction de l'axe de rotation (45) vers le « miroir de découplage » (47) du module de rotation (22), et ce miroir est installé pour guider le faisceau de 90° sortant du module de rotation (22) dans l'autre chemin de faisceau, et il comporte des moyens de réglage (49) pour la position et la direction du faisceau découplé (48).

**24.** Dispositif selon la revendication 23, **caractérisé en ce que**
le cinquième miroir (47) est installé pour que le faisceau découplé (48) soit précisément dirigé dans le prolongement de l'axe (38) du faisceau incident (39) et le module de rotation (22) fonctionne à la manière d'une « transmission optique » de façon que pour une rotation du module de rotation (22) autour de son axe (45), le profil d'intensité du faisceau découplé (48) tourne deux fois autour de son axe de faisceau.

**25.** Dispositif selon la revendication 24, **caractérisé en ce que**

le cinquième miroir est coulissé en direction de l'élément de faisceau (67) c'est-à-dire perpendiculairement à l'axe (38) du faisceau incident ou à l'axe de rotation (45) du module de rotation (22) pour permettre de régler des intervalles quelconques (z) entre l'axe (38) du faisceau incident et l'axe du faisceau découplé (48).

26. Dispositif selon les revendications 23 à 25, **caractérisé en ce que**
les possibilités d'ajustage (49) du miroir de découplage (47) permettent de régler l'angle ($\alpha$) dans une plage comprise entre 0° et 20°.

27. Dispositif selon les revendications 19 à 21, **caractérisé en ce qu'**
on utilise deux unités distinctes (10, 11) pour la rotation du profil d'intensité (10) et du faisceau de rayonnement autour de l'axe (11) du système, ces rotations ayant des fréquences angulaires ($\omega_1$ et $\omega_2$) de préférence incommensurables.

28. Dispositif selon les revendications 19 à 21 ou 27, **caractérisé en ce que**
l'unité (11) pour faire tourner le faisceau de rayonnement autour de l'axe du système, est constituée par une tête d'usinage rotative (51) comportant deux miroirs de renvoi (52 et 53) et la lentille de focalisation (24) et elle tourne à la vitesse angulaire ($\omega_2$).

29. Dispositif selon les revendications 19 à 21 ou 27, **caractérisé en ce que**
l'unité (11) de rotation du faisceau de rayonnement est inclinée sur son axe de symétrie d'un angle ($\gamma$) par rapport à l'axe du système, et la plaque plane parallèle tournant à la vitesse angulaire ($\omega_2$) forme l'épaisseur (d).

30. Dispositif selon les revendications 19 à 21 ou 27, **caractérisé en ce que**
l'unité (11) est formée par la combinaison d'un miroir de nutation (61), **caractérisée par** l'angle au sommet ($\beta$) et par un moteur (62) tournant à la vitesse angulaire ($\omega_2$) pour que le faisceau incident (55) développe avec l'axe du faisceau stable dans l'espace, un faisceau tournant, de forme circulaire, et d'un axicon (64), directement avant la lentille de focalisation (24).

31. Dispositif selon la revendication 30, **caractérisé en ce que**
la lentille de focalisation (24) est en amont du système formé par le miroir de nutation (61) et l'axicon (64).

32. Dispositif selon la revendication 30 ou 31, **caractérisé en ce qu'**
à la place du miroir de nutation (61), on utilise un dispositif de balayage en x-y (65), rapide.

33. Dispositif selon les revendications 19 à 32, **caractérisé en ce qu'**
il comporte des galets applicateurs (66) qui pose un film protecteur (13) tendu mais mobile contre la face supérieure de la pièce (14) et qui est rapidement déplacé par un dispositif au cours du procédé de perçage de façon que chaque impulsion d'usinage, séparée, rencontre un élément de surface du film protecteur (13) en amont qui n'a pas encore été sollicité par le faisceau.

34. Dispositif selon les revendications 19 à 33, **caractérisé en ce que**
le film protecteur (13) est un film métallique.

35. Dispositif selon les revendications 19 à 34, **caractérisé en ce que**
le film protecteur (13) a une épaisseur comprise entre environ 10 $\mu$m et 20 $\mu$m.

36. Dispositif selon les revendications 19 à 35, **caractérisé en ce que**
le liquide (15) absorbant le faisceau laser sort d'un système d'injection, de préférence d'une buse (35) pour arriver dans l'espace entre la face inférieure du perçage de forme définie (28) et la zone de la paroi opposée (30) afin que le liquide absorbant (34) qui s'écoule absorbe complètement le faisceau laser.

37. Dispositif selon les revendications 19 à 36, **caractérisé en ce que**
l'unité (4) de suppression sélective en longueur d'onde, de la réaction du faisceau, est formée entre la pièce (14) et le laser $CO_2$ (1) par trois composants, à savoir un déphaseur quart d'onde $\lambda/4$ (7), un miroir ATFR (6) et un élément optique (5) sélectif en longueur d'onde.

38. Dispositif selon la revendication 37, **caractérisé en ce que**
l'élément optique (5) sélectif en longueur d'onde est installé dans la zone du chemin du faisceau comprise entre le miroir d'extrémité du laser $CO_2$ (1) et l'unité (10) assurant la rotation du profil d'intensité.

39. Dispositif selon la revendication 37 ou 38, **caractérisé en ce que**
l'élément sélectif en longueur d'onde (5) est un prisme ou un réseau.

40. Dispositif selon la revendication 37 ou 38, **caractérisé en ce qu'**
un ou plusieurs miroirs sélectifs en fréquence servent à la sélection de la fréquence.

41. Dispositif selon les revendications 37 à 40,

**caractérisé en ce qu'**

au moins un composant de l'unité (4) est prévu à l'extérieur du résonateur laser pour une suppression sélective en longueur d'onde.

Fig. 1

Fig. 2

27

2

22

23

24

25

26

14

28

Fig. 3

Fig. 4

Fig. 5

Fig. 6

39  22  41  40  45

43  44  42  46  48

31

EP 1 660 269 B1

Fig. 7

Fig. 8

Fig. 9

Fig. 10

Fig. 11

63

62

ω₂

61

24

55

64

25

26

28

14

Fig. 12

Fig. 13

Fig. 14

Fig. 15

Fig. 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19905571 C1
- US 6292505 B1
- DE 19745380 A1
- FR 2269221 A
- WO 8903274 A

**In der Beschreibung aufgeführte Nicht-Patentliteratur**

- **F. DAUSINGER ; T. ABELN ; D. BREITLING ; J. RADTKE.** Bohren keramischer Werkstoffe mit Kurzpuls-Festkörperlaser. *LaserOpto,* 1999, vol. 31 (3), 78
- VDI: Abtragen, Bohren und Trennen mit Festkörperlasern. Laser in der Materialbearbeitung. VDI-Verlag, 1998, vol. 7
- **H. HÜGEL.** *Strahlwerkzeug Laser. Teubner Studienbücher,* 1992
- **K. JASPER.** Neue Konzepte der Laserstrahlformung und -führung für die Mikrotechnik. Utz Verlag, 2003
- **G. HERZIGER ; P. LOOSEN.** Werkstoffbearbeitung mit Laserstrahlung. Carl Hanser Verlag, 1993
- **M. FEURER.** Elektroerosive Metallbearbeitung. Vogel-Buchverlag, 1983
- **B. SCHUMACHER ; D. WECKERLE.** *Funkenerosion - Richtig verstehen und anwenden. Technischer Fachverlag Dipl.-Ing,* 1988